Europäisches Patentamt

European Patent Office

Office européen des brevets

(19)

(11) EP 0 566 185 B1

(12) FASCICULE DE BREVET EUROPEEN

(45) Date de publication et mention
de la délivrance du brevet:
**10.09.1997 Bulletin 1997/37**

(51) Int Cl.⁶: **H04N 7/24**

(21) Numéro de dépôt: **93201000.2**

(22) Date de dépôt: **06.04.1993**

(54) **Sous-ensemble de codage d'images avec correction de rafraîchissement des données à coder, et sous-ensemble de décodage de signaux représentatifs de ces images**

Unter-Ensemble zur Bildkodierung mit Korrektur der Aktualisierung der kodierenden Daten und Unter-Ensemble zur Dekodierung der diese Bilder darstellenden Signale

Sub-set for coding images with up-date correction of the data to be coded and sub-set for decoding signals representing these images

(84) Etats contractants désignés:
**DE FR GB**

(30) Priorité: **14.04.1992 FR 9204582**
**14.04.1992 FR 9204583**
**01.07.1992 FR 9208102**

(43) Date de publication de la demande:
**20.10.1993 Bulletin 1993/42**

(73) Titulaires:
• **LABORATOIRES D'ELECTRONIQUE PHILIPS S.A.S.**
**94450 Limeil-Brévannes (FR)**
Etats contractants désignés:
**FR**
• **Philips Electronics N.V.**
**5621 BA Eindhoven (NL)**
Etats contractants désignés:
**DE GB**

(72) Inventeurs:
• **Riglet, Philippe**
**F-75008 Paris (FR)**
• **Bouchard, Lionel**
**F-75008 Paris (FR)**
• **Sirat, Jacques-Ariel**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 225 729          EP-A- 0 474 304**
**WO-A-88/09101          US-A- 4 996 594**
**US-A- 5 117 287**

• **IMAGE COMMUNICATIONS vol. 1, no. 2, 31 Octobre 1989, pages 139 - 152 AIZAWA ET AL 'model-based analysis synthesis image coding (mbasic) system for a person face'**
• **BR TELECOM TECHNOL J vol. 8, no. 3, 31 Juillet 1990, pages 94 - 106 WELSH ET AL 'model-based image coding'**
• **IEEE TRANSACTIONS ON ACOUSTICS, SPEECH AND SIGNAL PROCESSING vol. 37, no. 12, 31 Décembre 1989, NEW YORK US pages 2008 - 2023 FORCHHEIMER ET AL. 'image coding - from waveforms to animation'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un sous-ensemble de codage d'images disponibles sous la forme de signaux numériques correspondant aux informations de luminosité ou de couleur des points d'image ou pixels, lesdites images comprenant au moins un motif mobile sur un fond fixe ou quasi-fixe et étant destinées à une transmission à très bas débit et/ou à un stockage avec un taux élevé de compression de données, ledit sous-ensemble comprenant, en vue de la restitution ultérieure d'images de synthèse, d'une part des moyens de construction d'un modèle de base à facettes représentatif d'une zone dite utile des images d'origine et d'autre part des moyens de codage des données à transmettre et/ou stocker. Cette invention est utilisable notamment dans un système de codage d'images visiophoniques.

La présente invention concerne également un sous-ensemble de décodage de signaux représentatifs d'une séquence d'images et ayant préalablement subi, en vue de leur transmission dans un canal à très bas débit et/ou de leur stockage avec un taux de compression de données élevé, un codage réalisé à l'aide d'une part de moyens de construction d'un modèle de base à facettes représentatif de la zone utile desdites images, par calibration initiale du modèle dans cette zone utile puis réactualisation des informations représentatives du modèle ainsi calibré par un suivi des déplacements d'une ou de fenêtres initialement définies en des zones caractéristiques, d'intérêt particulier, de ladite zone utile des images, et d'autre part de moyens de codage spécifique des informations essentielles résultant desdites calibration initiale et réactualisation.

La visioconférence, la visioréunion sont des activités au développement actuellement très rapide, mais les visiophones actuellement présentés ou mis sur le marché ne sont pas destinés à des transmissions sur le réseau téléphonique classique, qui est à très bas débit. Il apparaît donc comme très important sur le plan économique de pouvoir combler cette lacune. Le document "Model-based analysis synthesis image coding (MBASIC) system for a person's face", de K. Aizawa, H. Harashima et T. Saito, paru dans "Signal Processing : Image Communication, vol. 1, n°2, octobre 1989, Elsevier Science Publishers B.V., pp.139-152, décrit la mise en oeuvre d'un procédé de synthèse d'images dans lequel il est prévu, pour une reconstitution d'images correspondant à des images d'origine préalablement codées, d'adapter auxdites images un modèle tridimensionnel de base du type fil de fer, et l'on réalise cette adaptation de façon particulièrement précise dans des zones considérées comme ayant un intérêt particulier, notamment les zones qui correspondent, dans un visage, aux expressions faciales les plus typiques. Le procédé ainsi proposé conduit effectivement à un taux de compression de données qui peut être considéré comme satisfaisant.

Néanmoins, dans des applications où l'attention du spectateur se porte essentiellement sur ces zones d'expressions faciales typiques, la qualité des images synthétisées risque d'apparaître comme très insuffisante, le rendu des images manquant de réalisme, notamment du fait des différences de luminance qui apparaissent entre les différentes zones soumises à des codages spécifiques.

Un premier but de l'invention est donc de proposer un sous-ensemble de codage dans lequel est mise en oeuvre une solution apte à augmenter la qualité des images synthétisées malgré un taux de compression de données élevé.

L'invention concerne à cet effet un sous-ensemble de codage tel que défini dans le préambule de cette description et qui, en outre, est caractérisé en ce que :

(A) lesdits moyens de construction d'un modèle de base comprennent des moyens de calibration initiale, dans une période déterminée, de ce modèle dans ladite zone utile des images, avec adaptation dudit modèle à des points de référence caractéristiques obtenus dans cette zone utile, et des moyens de réactualisation des informations essentielles représentatives dudit modèle calibré, comprenant eux-mêmes un circuit de détermination du mouvement des points caractéristiques extraits de ladite zone utile et un circuit de sélection d'au moins une zone d'intérêt particulier à l'intérieur de ladite zone utile et de détermination de son mouvement ;
(B) lesdits moyens de codage comprennent eux-mêmes :

(1) un circuit de codage des signaux de sortie desdits moyens de calibration initiale ;
(2) un circuit de codage des signaux de sortie dudit circuit de détermination de mouvement ;
(3) un circuit de codage des signaux de sortie dudit circuit de sélection de zone d'intérêt ;
(4) un circuit de correction préalable, dans une zone de transition longeant la frontière de ladite ou desdites zones d'intérêt, des décalages de luminance observés de part et d'autre de ladite frontière.

La structure ainsi proposée est avantageuse en ce sens que, pour la transmission (et/ou le stockage) du type d'image considéré, des taux de compression de données très élevés peuvent être effectivement obtenus en codant de façon systématique seulement quelques zones d'intérêt particulier de ladite image, en ne codant, pour la partie résiduelle de cette image, que quelques paramètres essentiels correspondant à des points caractéristiques de l'image et aux déplacements et rotations élémentaires traduisant les mouvements de ces points d'une image à l'autre, et en prévoyant le long de la frontière des zones de codage ainsi définies une correction des décalages de luminance observés du fait du choix de ces codages distincts.

EP 0 566 185 B1

Selon un mode particulier de réalisation, ce sous-ensemble de codage est caractérisé en ce que, dans lesdits moyens de construction d'un modèle de base, les moyens de calibration initiale comprennent un circuit d'extraction desdits points caractéristiques de ladite zone utile, et en ce que les moyens d'adaptation comprennent un circuit d'alignement sur les images originales et de mise à l'échelle et un circuit d'ajustement de régions plus expressives.

Dans le circuit de correction préalable des moyens de codage, il est prévu, de préférence, la solution particulière suivante, à savoir que chaque zone de transition pour la correction du décalage de luminance est un ruban d'une largeur de quelques pixels et dont les bords sont sensiblement parallèles à ladite frontière. Ce ruban peut être à l'intérieur ou à l'extérieur de la zone d'intérêt particulier concerné, ou bien chevaucher la frontière de cette zone.

Le sous-ensemble de codage ainsi proposé peut cependant être mis en défaut lors de mouvements trop importants des parties mobiles de la séquence d'images. En particulier, des mouvements de personnages, notamment en rotation, peuvent déclencher l'apparition de zones qui n'étaient pas visibles, ou qui l'étaient très peu, et une sorte de calibration complémentaire, accompagnant ces mouvements de rotation et prévue pour la définition de ces zones sur le modèle de base tridimensionnel, est en général réalisée par interpolation à partir des points existants. Cette interpolation, linéaire en général, est effectuée sur chaque facette et réaugmente périodiquement le volume des données à transmettre, tout en conduisant le plus souvent à l'apparition de discontinuités de luminance entre facettes voisines.

Un autre but de l'invention est de proposer un sous-ensemble de codage mettant en oeuvre des moyens de calibration auxiliaire et de codage simplifiés, dans le cas où les objets ou personnages animés effectuent des mouvements de rotation assez importants, faisant apparaître plus ou moins leur profil.

L'invention concerne à cet effet un sous-ensemble de codage tel que défini dans le préambule de cette description et qui est caractérisé en ce qu'il comprend également un dispositif de correction de calibration, comprenant lui-même des moyens de détection d'écart de luminance, ou de chrominance respectivement, entre lesdites images de synthèse et les images originales correspondantes, des moyens de rafraîchissement local de données selon les résultats de ladite détection, et des moyens de codage des informations complémentaires ou nouvelles obtenues à la suite dudit rafraîchissement, lesdites informations codées complémentaires ou nouvelles étant transmises et/ou stokées de façon prioritaire par rapport aux autres données codées à transmettre et/ou stocker.

Avec la structure ainsi proposée, le rafraîchissement par zones regroupant différentes facettes d'orientations différentes assure une meilleure continuité de la luminance dans les images de synthèse, et un nombre réduit d'opérations de rafraîchissement suffit à réaliser une restitution d'image de qualité correcte, même pour des mouvements de rotation importants des objets ou personnages de la séquence d'images.

Dans un mode particulier de réalisation, lesdits moyens de détection comprennent un circuit de calcul de l'erreur moyenne entre une image de synthèse et l'image originale correspondante. Dans un autre mode de réalisation, ces moyens de détection comprennent un circuit de détection angulaire de l'orientation dudit modèle initialement calibré. Dans un troisième mode de réalisation, des grandeurs dites coefficients de texture sont attachées à chaque facette du modèle de base, et lesdits moyens de détection comprennent alors un circuit de calcul du rapport, pour une facette donnée, ou pour plusieurs ou la totalité des facettes d'une zone donnée, entre le nombre de coefficients de texture déterminés par interpolation des valeurs initiales de ces coefficients de texture pour la ou les facettes considérées et le nombre de ces coefficients de texture initiaux pour la ou les mêmes facettes.

Un autre but de l'invention est enfin de proposer un sous-ensemble de décodage apte à décoder des signaux représentatifs d'images qui ont été préalablement codés à l'aide d'un sous-ensemble de codage ayant une structure telle que l'une de celles qui viennent d'être mentionnées.

L'invention concerne à cet effet un sous-ensemble de décodage tel que défini dans le préambule de la description et qui est en outre caractérisé en ce qu'il comprend :

(1) un circuit de détection de la présence du mode de fonctionnement en calibration initiale ou au contraire en réactualisation ;
(2) en sortie de celui-ci et en parallèle l'un sur l'autre :

(a) un étage de décodage des informations de calibration initiale ;
(b) un étage de décodage des informations de réactualisation ;

(3) un étage d'affichage vidéo, prévu pour recevoir les sorties en parallèle desdits étages de décodage.

Avec cette structure, des décodages spécifiques sont opérés pour les différentes parties des images transmises, en fonction des codages eux-mêmes spécifiques réalisés préalablement, un décodage relativement rudimentaire suffisant pour la plus grande partie de ces images et un décodage plus précis étant réalisé dans la ou les zones dont une restitution de qualité est souhaitée.

Dans un mode particulier de réalisation, ce sous-ensemble de décodage est caractérisé en ce que :

(A) ledit étage de décodage des informations de calibration initiale comprend :

(a) une première voie comprenant elle-même, en série, un circuit de mémorisation de paramètres initiaux, pour la mise à l'échelle du modèle de base, un circuit de calcul et de mémorisation d'informations d'adaptation dudit modèle à partir des variations des coordonnées des noeuds des facettes de ce modèle, et un circuit de calcul des coordonnées initiales correspondant à l'orientation de l'image initiale transmise ;

(b) en parallèle sur ladite première voie, une deuxième voie comprenant elle-même, en série, un circuit de réception et de décodage de la ou des fenêtres initiales de la séquence d'images, un circuit de calcul de coefficients de texture attachés respectivement aux facettes du modèle, et un circuit de calcul d'image de synthèse, ce dernier étant prévu pour recevoir également le signal de sortie dudit circuit de calcul de coordonnées initiales et pour fournir son signal de sortie audit étage d'affichage vidéo ;

(B) ledit étage de décodage des informations de réactualisation comprend :

(a) un circuit de réception des paramètres codés indiquant les déplacements des points caractéristiques du modèle ;

(b) en sortie de celui-ci et en parallèle l'une sur l'autre, une première branche comprenant elle-même en série un circuit de calcul des coordonnées d'écran, pour la définition de la position courante du modèle à l'aide desdits paramètres codés, et un circuit de calcul d'image de synthèse, et une deuxième branche comprenant elle-même un circuit de détermination d'informations relatives aux fenêtres associées à des zones d'intérêt particulier des images, pour le calcul des positions et dimensions de ces fenêtres ainsi que la réception et le décodage des informations codées relatives à ces fenêtres, et, en sortie de ces deux branches, un dispositif d'adaptation des fenêtres aux images de synthèse.

Dans ce mode de réalisation, lorsque les moyens de codage incluent notamment des moyens de correction préalable des décalages de luminance pouvant être observés de part et d'autre des frontières qui, dans ladite zone utile, séparent l'une de l'autre les zones de codage spécifique, ledit dispositif d'adaptation est un circuit unique de recollage de la ou des fenêtres sur chaque image de synthèse. Au contraire, lorsque ces moyens de correction préalable ne sont pas prévus dans la partie codage, ledit dispositif d'adaptation comprend, en série, un circuit de correction de décalage de luminance, recevant les sorties desdits circuits de calcul d'image de synthèse et de détermination d'informations relatives aux fenêtres, et un circuit d'adaptation des fenêtres aux images de synthèse.

Enfin, dans une variante perfectionnée de réalisation, le sous-ensemble de décodage est caractérisé en ce que ledit circuit de détection de mode de fonctionnement comprend aussi une détection de la présence d'un mode de rafraîchissement des informations de calibration et en ce que le sous-ensemble de décodage comprend, en sortie dudit circuit de détection et en parallèle sur les étages de décodage d'informations de calibration et de réactualisation, un étage de décodage des informations de rafraîchissement dont la sortie est également reçue par ledit étage d'affichage vidéo, cet étage de décodage comprenant lui-même :

(a) un circuit de réception des paramètres codés indiquant les déplacements des points caractéristiques du modèle ;

(b) en sortie de celui-ci et en parallèle l'une sur l'autre, une première branche, comprenant elle-même un circuit de calcul des coordonnées d'écran et des coordonnées de la ou des fenêtres résultant du rafraîchissement, et une deuxième branche, comprenant elle-même en série un circuit de décodage des informations de rafraîchissement, recevant également lesdites coordonnées de la ou des fenêtres résultant du rafraîchissement, et un circuit de calcul des coefficients de texture attachés aux facettes du modèle concernées par ledit rafraîchissement, et, en sortie de ces deux branches, un circuit de calcul d'image de synthèse.

Les particularités et avantages de l'invention apparaîtront maintenant de façon plus détaillée dans la description qui suit, faite en référence aux dessins annexés dans lesquels :

- la figure 1 montre un exemple de réalisation d'un sous-ensemble de codage d'images visiophoniques selon la présente invention, et la figure 2 montre un exemple de réalisation du dispositif de segmentation de ce sous-ensemble de codage ;
- la figure 3 est un organigramme résumant les diverses opérations entreprises pour un traitement des images par segmentation, préalablement audit codage ;
- la figure 4 montre les principales zones où sont localisés des points de référence définissant les formes caractéristiques d'un visage, en vue des opérations de calibration de modèle et de suivi de déplacement décrites plus loin ;
- la figure 5A montre un exemple de modèle tridimensionnel de base, à facettes, à partir duquel est réalisée l'adaptation aux images originales présentes à l'entrée du sous-ensemble de codage selon l'invention, et la figure 5B montre ce même modèle après réalisation de ladite adaptation pour un exemple de visage réel bien déterminé ;

- la figure 6 illustre le fait que chaque facette du modèle tridimensionnel peut être ombrée en fonction de l'éclairement qu'elle est supposé recevoir d'une source de lumière ponctuelle ;

- la figure 7 montre sur un visage les six degrés de liberté selon lesquels vont être décrits les mouvements de ce visage, la figure 8 illustre la méthode de suivi du déplacement de fenêtres placées en des zones caractéristiques du visage, et la figure 9 montre ledit visage dans le cas particulier où trois fenêtres séparées, une pour chaque oeil et une pour la bouche, sont choisies pour subir un codage spécifique tenant compte du fait que ces zones du visage sont particulièrement animées et donc d'un intérêt particulier ;

- la figure 10 montre dans la séquence des images à coder un groupe de N = 10 images et met en évidence, à l'aide de flèches, la façon dont les images de rang 4, 7, 10 et de rang 2, 3, 5, 6, 8, 9 sont obtenues par prédiction les unes en fonction des autres et de l'image de rang 1 ;

- les figures 11, 12, 13 montrent trois exemples de zones de transition entre d'une part des fenêtres, telles que celles visibles par exemple sur la figure 9, et d'autre part le reste de l'image soumise au codage ;

- la figure 14 est une représentation du modèle tridimensionnel vu de profil, et montre plus particulièrement deux zones de ce modèle qui ont été partiellement ou totalement exclues de la calibration initiale ;

- la figure 15 montre la structure générale d'un sous-ensemble de décodage d'images selon l'invention ;

- la figure 16 montre, dans ce sous-ensemble de décodage, un exemple de réalisation de l'étage de décodage des informations de calibration initiale du modèle tridimensionnel ;

- la figure 17 illustre, à propos du calcul des coefficients de texture, une méthode de balayage des facettes successivement rencontrées sur chaque ligne ;

- la figure 18 montre, dans le sous-ensemble de décodage de la figure 15, un exemple de réalisation de l'étage de décodage des informations de réactualisation ;

- la figure 19 illustre le principe de détermination des coefficients de texture non transmis, par interpolation de ceux des coefficients qui, eux, ont été transmis en sortie du sous-ensemble de codage ;

- la figure 20 montre, dans le sous-ensemble de décodage de la figure 15, un exemple de réalisation de l'étage de décodage des informations de rafraîchissement ;

- la figure 21 montre une variante de réalisation d'un des circuits de l'étage de décodage des informations de réactualisation représenté sur la figure 18.

Un visiophone est un appareil permettant aux interlocuteurs d'une communication téléphonique d'obtenir en outre, sur un écran, l'image animée de leur(s) correspondant(s). Deux types d'information doivent pouvoir être reconnaissables sur l'écran, a savoir le personnage et le fond. Dans l'exemple de réalisation ici décrit, on suppose que les images à transmettre sont constituées d'un personnage animé et d'un fond fixe (ou quasi-fixe, en appelant ainsi un fond qui par exemple a subi un recalage d'image). En outre, le format desdites images est ici du type défini par le CCITT (Consultative Committee for International Telephony and Telegraph) comme format d'image standard pour une transmission sur des réseaux à très bas débit, à savoir le CIF (Common Intermediate Format), adopté pour les applications de téléphonie visuelle et de visioconférence afin de remédier à l'incompatibilité actuelle des standards de télévision dans le monde.

Avec le format CIF, le signal de luminance comprend 288 lignes de 360 pixels chacune, et le signal de chrominance 144 lignes de 180 pixels chacune. Une image vidéo CIF est donc composée de 155520 pixels, et avec un affichage qui serait par exemple de 15 images par seconde, il faudrait donc transmettre 2332800 pixels, codés chacun sur 8 bits. La vitesse de transmission pour le transfert d'une image CIF s'élève donc à plus de 18 Mb par seconde, ce qui ne constitue pas précisément un bas débit et implique de faire impérativement appel à une compression de données.

Alternativement, un deuxième format d'image a été défini pour permettre la mise au point d'équipements meilleur marché. Désigné par le sigle QCIF (Quart de CIF), ce format divise par deux la définition des informations de luminance (comprenant maintenant 144 lignes de 180 pixels chacune) et des informations de chrominance (comprenant maintenant 72 lignes de 90 pixels chacune), avec une fréquence d'affichage de 7,5 images par seconde.

Dans la suite de la description, on précisera certains résultats ou certaines valeurs soit dans le standard CIF, soit dans le standard QCIF soit encore dans un troisième format, par exemple 682 x 512 pixels (format 4/3). Cependant, les formats ainsi envisagés ne constituent pas des exemples limitatifs en ce qui concerne la présente invention (le format 4/3 de la télévision, de 720 x 576 pixels, pourrait bien entendu aussi être envisagé). Par ailleurs, il semble également qu'une fréquence de 10 images par seconde constitue encore un compromis satisfaisant entre le confort visuel des interlocuteurs et la réduction indispensable du débit.

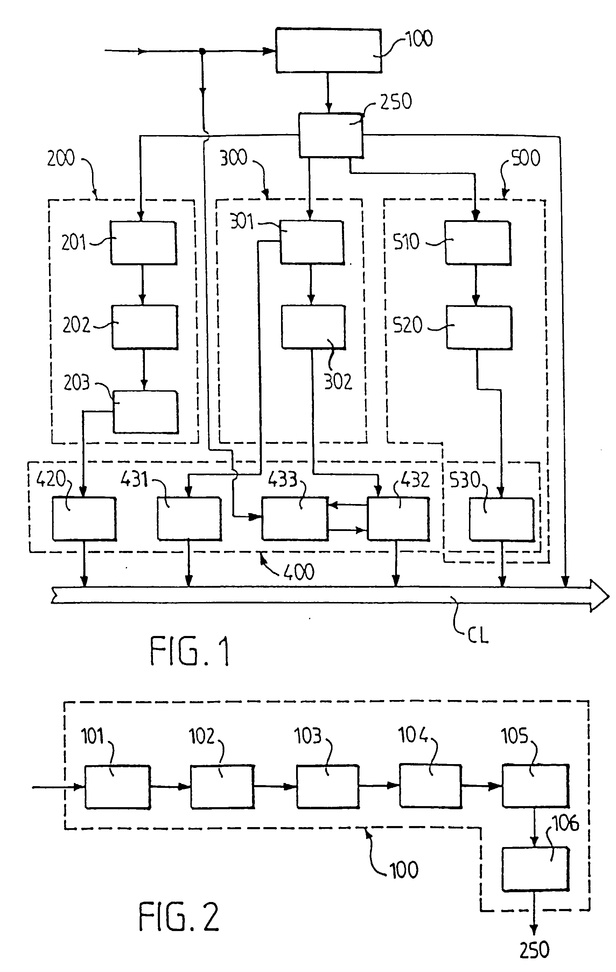

La suite de la présente description concerne un ensemble de codage et de décodage d'images destinées à une telle transmission à très bas débit et/ou à un stockage avec un taux de compression élevé des données correspondant à ces images, ledit ensemble comprenant d'une part un sous-ensemble de codage d'images visiophoniques et d'autre part un sous-ensemble de décodage d'images ainsi codées. Le sous-ensemble de codage d'images visiophoniques ici décrit en référence à la figure 1 reçoit sur son entrée une séquence d'images vidéo composées d'images telles que définies ci-dessus. Ces images ont par exemple été obtenues à l'aide d'une caméra CCD, avec un format de 512 x 512 éléments d'image (ou pixels) à l'origine. Cette caméra délivre ici un signal en teintes de gris sur 256 niveaux (pixels codés sur 8 bits), mais on pourrait aussi traiter des images en couleurs et avec un format différent.

La séquence d'images au format CIF présente à l'entrée du sous-ensemble est fournie à un dispositif de segmentation 100. Dans l'exemple décrit, il est en effet utile d'extraire automatiquement du fond immobile la zone correspondant au visage de l'interlocuteur (et au haut du buste). Cette extraction repose sur l'analyse d'une succession d'images, par exemple entre une dizaine et une vingtaine, dont on retient ici un nombre n, par exemple les images de rang 4, 8, 12 et 16, notées respectivement $I_1$, $I_2$, $I_3$, $I_4$ (dans cette succession, les images retenues doivent être suffisamment espacées pour capter au mieux les déplacements, mais pas trop pour éviter un surdimensionnement de la silhouette dans le cas de déplacements importants).

Comme le montre la figure 2, le dispositif 100 comprend tout d'abord un circuit 101 de détermination de silhouette par un calcul de la différence (ici pixel par pixel) entre ces images. Pour obtenir une différence moyenne permettant de tenir compte de fluctuations dans les mouvements de la tête et du buste, ce calcul de différence est effectué selon la formule suivante :

$$DIFF(i,j) = |\,I_4(i,j) - I_3(i,j)|$$

$$+ \,|\,I_4(i,j) - I_2(i,j)|$$

$$+ \,|\,I_4(i,j) - I_1(i,j)|$$

expression dans laquelle i et j correspondent au rang du pixel courant dans les lignes et les colonnes, |\,.\,| désigne l'opérateur "valeur absolue de", et DIFF est la différence moyenne ainsi calculée. Cette différence est alors comparée à un seuil THRE1 (de quelques unités, par exemple 4) pour séparer le signal utile du bruit de fond : si la différence est supérieure au seuil, on prend $DIFF(i,j) = 255$ (maximum de l'échelle des 256 niveaux de luminance variant de 0 à 255), le pixel correspondant étant considéré comme étant en mouvement dans la succession d'images considérée et donc comme appartenant au personnage. Sinon, le pixel courant est considéré comme statique, et on lui associe alors une luminance nulle $DIFF(i,j) = 0$. Ce calcul de différence, par suppression du fond basée sur le mouvement, implique bien entendu que la luminance ambiante, correspondant au fond, reste constante pendant cette succession d'images, faute de quoi une variation de luminance pourrait être confondue avec un mouvement réel.

Le circuit 101 est suivi d'un circuit 102 de suppression de bruit. En effet, au cours de la détermination de silhouette, il peut subsister de petites variations de luminosité du fond, affectant quelques pixels isolés situés hors de la zone du visage. Le circuit 102 permet alors, en examinant pour chaque pixel P de l'image la luminance des pixels voisins contenus par exemple dans un bloc centré sur ce pixel P, d'effectuer une moyenne sur ce voisinage de P : si les pixels du bloc sont en majorité blancs, on donne à P le niveau de luminance 255, sinon sa luminance est considérée comme égale à 0. Cette opération est effectuée comme indiqué ci-dessous à l'aide de ces inégalités :

- si $\Sigma\,DIFF(k,l) > THRE2$
    $\Rightarrow \Sigma\,DIFF(k,l) = 255$
- si $\Sigma\,DIFF(k,l) < THRE2$
    $\Rightarrow \Sigma\,DIFF(k,l) = 0$

expressions dans lesquelles les lettres k, l correspondent respectivement au rang des lignes et des colonnes des pixels du voisinage de $P(i,j)$, et THRE2 est la valeur de seuil qui permet de prendre la décision majoritaire après réalisation de la moyenne des luminances. Lorsque ladite opération est terminée, la zone correspondant au fond est remplie de pixels noirs, tandis que celle correspondant au personnage est majoritairement remplie de pixels blancs.

Un circuit 103 de suppression de discontinuités permet ensuite de rendre homogène la silhouette du personnage en éliminant les pixels noirs qui subsisteraient éventuellement à l'intérieur. Cette suppression est par exemple réalisée en balayant ligne par ligne l'image et en déterminant, pour chaque ligne, le segment dont les deux extrémités coïncident avec les deux contours gauche et droit du personnage, puis en donnant la valeur de luminance 255 à tous les pixels de ce segment. La zone qui apparaît ainsi en blanc doit présenter un profil continu. On veille donc à éliminer, parmi les points d'extrémité de ces segments, ceux qui introduiraient une discontinuité dans ce profil et que l'on peut qualifier d'aberrants. Plus précisément, si l'on appelle respectivement $P_L(i,j)$ et $P_R(i,j)$ les extrémités du segment pour la ligne courante, c'est-à-dire le premier pixel blanc et le dernier pixel blanc rencontrés sur la ligne courante balayée (c'est-à-dire encore, de façon équivalente, le premier pixel rencontré sur cette ligne à partir de la gauche et à partir de la droite de l'écran respectivement), cette suppression des points aberrants qui engendrent des discontinuités est effectuée en tenant compte de l'inclinaison plus ou moins grande du contour de la silhouette du personnage par rapport a ladite ligne courante, à l'aide d'un test des discontinuités entre la ligne précédente j-1 et la ligne courante j. Cette opération peut être exprimée de la façon suivante : selon que la différence de luminance entre les pixels $P_L$ (ou respectivement $P_R$) de rang j-1 et j est supérieure ou inférieure à un seuil prédéterminé THRE3, le point $P_L$ (ou $P_R$ respectivement) est considéré comme non valide et éliminé (luminance forcée à la valeur 0) ou au contraire comme valide, et l'on passe alors au test similaire pour les lignes j et j+1.

Le seuil THRE3 désigne la valeur de discontinuité tolérée entre deux lignes successives de la zone du personnage. Cette valeur dépend de la région considérée le long du contour de la silhouette :

- lorsque le profil est très arrondi (haut de la tête) et que ladite inclinaison correspond donc à un angle très faible ou au contraire voisin de 180°, on peut accepter d'une ligne à l'autre des discontinuités assez élevées, et l'on prendra par exemple pour THRE3 une valeur de l'ordre de quelques dizaines de pixels ;
- au milieu de l'image, dans la région qui correspond aux tempes, aux joues et au cou, cette inclinaison est voisine de 90° ou en tout cas éloignée des valeurs extrêmes 0 ou 180°, les discontinuités d'une ligne à l'autre sont faibles, et la valeur de THRE3 est alors de l'ordre de quelques pixels ;
- pour le bas de l'image, dans la région des épaules et du buste, l'inclinaison peut retrouver les valeurs extrêmes signalées, et de fortes discontinuités entre lignes successives, de l'ordre de plusieurs dizaines de pixels, existent à nouveau.

Aux circuits 102 et 103 est enfin associé, pour une opération de lissage, un circuit 104 de suppression des irrégularités du contour séparant la silhouette du fond. Là encore, divers modes de suppression pourraient être envisagés, et par exemple un filtrage morphologique. Comme pour le circuit 102, on a ici choisi d'effectuer une moyenne et une comparaison à un seuil de luminance THRE4, plus précisément en considérant chaque pixel blanc peu éloigné du contour, en testant la luminance de ses voisins, et en lui associant la luminance majoritaire dans ledit voisinage.

Après ces opérations successives de suppression d'irrégularités affectant éventuellement le fond, la silhouette, et le contour les séparant, la segmentation d'image est effective et l'on dispose désormais d'une image binaire, à chaque pixel P(i,j) de laquelle correspond une valeur de l'expression DIFF(i,j). Cette image binaire est alors utilisée par un circuit 105 de substitution d'image pour définir en teintes de gris (ou le cas échéant en couleurs) l'image de la zone du personnage. Cette définition est réalisée de la façon suivante : si DIFF(i,j) = 255, alors l'image originale est recopiée à la place de l'image binaire, sinon, pour tout pixel où DIFF(i,j) = 0, le fond est mis à la valeur 0.

Sur cette image en nuances (teintes de gris, ou couleurs) et sans fond est enfin effectué un dernier traitement, à l'aide d'un circuit 106 de suppression des effets du mouvement. En effet, puisque l'on superpose l'image originale à une image différence résultant de la prise en compte de plusieurs images de la séquence des images d'entrée, il apparaît entre cette image originale et ladite image différence (nécessairement plus large) une sorte de halo, ou de surdimensionnement, dont l'épaisseur correspond aux mouvements effectués par le personnage pendant la prise de vues correspondant à la succession d'images utilisée pour les traitements précédents. Pour éliminer ce halo, le circuit 106 comprend un détecteur de contour qui va faire apparaître à la fois le bord extérieur du halo (c'est-à-dire le contour de l'image sans fond) et son bord intérieur (c'est-à-dire le véritable contour du personnage). Ce détecteur du circuit 106 détecte pour chaque ligne successivement balayée deux points de contour du côté gauche du personnage et deux autres points de contour de son côté droit, et l'on associe alors une luminance nulle aux pixels compris entre ces deux points de contour gauche ainsi qu'aux pixels compris entre ces deux points de contour droit.

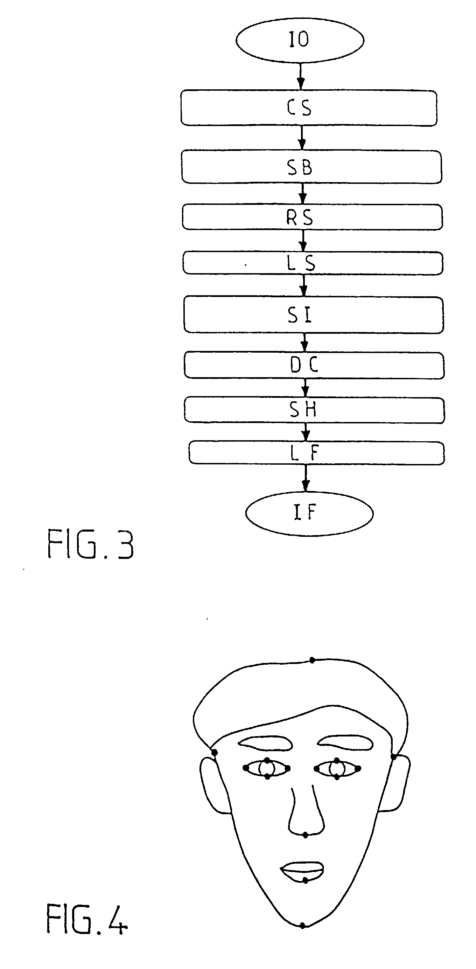

On dispose ainsi, cette fois, après un éventuel dernier lissage, d'une image donnant le profil réel du personnage. La figure 3 montre un organigramme qui rassemble les opérations ici successivement réalisées pour l'extraction du personnage du fond, ces opérations intermédiaires étant, à partir de chaque image originale IO, les suivantes : création de la silhouette par différence entre plusieurs images (CS), suppression du bruit (SB), remplissage de la silhouette (RS), lissage de celle-ci (LS), segmentation de l'image sans fond (SI), détection de contour (DC), suppression du halo (SH), et lissage final (LF) fournissant l'image sans fond IF.

Dans le système décrit, il est également prévu, en parallèle, un dispositif 200 de construction d'un modèle tridimensionnel du contenu de la zone utile de l'image et un dispositif 300 de réactualisation des paramètres principaux de définition dudit modèle, puis un dispositif 400 de codage des informations délivrées par les dispositifs 200 et 300. Le dispositif 200 est destiné, dans le cadre de l'application ici décrite qui consiste à localiser et suivre un personnage dans une séquence animée d'images visiophoniques, à permettre une calibration initiale par adaptation d'un modèle tridimensionnel de base. Le dispositif 300 permet alors de réactualiser ce modèle pour prendre en compte les mouvements qui interviennent au cours de ladite séquence. Un commutateur 250, dont on verra plus loin le fonctionnement, est prévu en sortie du dispositif 100 pour commander le passage du fonctionnement du dispositif 200 au fonctionnement du dispositif 300.

Le dispositif 200, qui reçoit comme informations des signaux vidéo numériques correspondant à la partie animée d'une séquence d'images et sélectionnés par segmentation, par exemple selon le principe de segmentation décrit ci-dessus, comprend tout d'abord un circuit 201 d'extraction de points de référence dans ladite zone utile des images à transmettre. En effet, pour une reproduction fidèle ou en tout cas satisfaisante du visage du personnage occupant ladite zone utile à partir d'un modèle géométrique tridimensionnel, il est important de déterminer préalablement les principaux points caractéristiques du visage présent dans la séquence d'images (à savoir, comme le montre la figure 4, le sommet de la tête, les tempes, les yeux, le nez, la bouche, et le menton), qui vont permettre la calibration initiale du modèle tridimensionnel (puis un suivi de déplacement, comme on le verra plus loin). Le document "Model-based analysis synthesis image coding (MBASIC) system for a person's face" déjà cité décrit un exemple de réalisation d'une telle opération visant à la synthèse ultérieure d'une image de sortie à partir d'un modèle tridimensionnel.

Pour cette extraction de points de référence, le circuit 201 considère l'image dans laquelle le fond a été supprimé et effectue un balayage, par exemple vertical, de cette image pour déterminer le premier point caractéristique, qui est le sommet de la tête et dont l'ordonnée correspond au maximum en ordonnée de l'image sans fond. Les points caractéristiques des yeux (coins des yeux, ainsi que point haut et point bas de chaque oeil) sont ensuite déterminés par segmentation dans une fenêtre centrée automatiquement sur la zone des yeux. Cette fenêtre est définie à partir notamment de la position du sommet de la tête et en tenant compte de l'épaisseur des cheveux, très variable d'un personnage à l'autre, pour bien placer cette fenêtre au-dessous de la zone correspondant aux cheveux et la centrer effectivement au niveau des yeux.

La méthode de segmentation repose sur un seuillage à plusieurs niveaux, les seuils choisis étant égaux aux minima de l'histogramme de luminance dans la fenêtre. Plus précisément, il faut d'abord réaliser une première opération, qui consiste à déterminer les extrémités de la région correspondant aux cheveux en segmentant par la méthode de l'histogramme une fenêtre dont le bord supérieur est donné par le sommet de la tête. Le nombre de niveaux de l'histogramme est ajusté de façon que la luminance des cheveux apparaisse comme constante et que cette zone des cheveux n'apparaisse donc que comme une seule région. La limite inférieure de la région des cheveux peut être choisie comme référence pour définir à son tour la fenêtre des yeux. S'il n'y a pas de détection de cheveux (cas d'un homme chauve), on peut définir une position probable de la fenêtre des yeux par la seule position du sommet de la tête, en choisissant alors une fenêtre de taille suffisante. La fenêtre des yeux étant ainsi définie, la seconde opération consiste à la segmenter en régions, toujours par la méthode de l'histogramme. Il faut en effet mettre en évidence la zone des yeux proprement dite, qui est plus contrastée que la peau (ceci suppose bien entendu que les conditions d'éclairage du personnage soient suffisamment correctes pour qu'il n'y ait pas d'ombres susceptibles de fausser la segmentation). Le nombre de niveaux de l'histogramme est alors ajusté automatiquement de façon à pouvoir localiser les quatre points caractéristiques de chaque oeil, dont les coordonnées sont fournies en recherchant les extrema en abscisse et en ordonnée de la forme obtenue après segmentation. On peut aussi ajouter à cette localisation des yeux une localisation des tempes, ce qui désigne ici les deux points appartenant aux contours extérieurs gauche et droit du personnage, à une ordonnée choisie approximativement au niveau des sourcils (ce qui d'ailleurs peut aussi correspondre sensiblement à l'ordonnée des points caractéristiques supérieurs des yeux). L'abscisse correspondant à cette ordonnée est déterminée par les points de contour extérieur de l'image sans fond, en balayant la ligne correspondant à cette ordonnée.

A partir de la localisation des yeux, une fenêtre de recherche de la bouche est définie, par translation de celle contenant les yeux. Si le contraste autour de la bouche est faible, on utilise de préférence à la méthode de segmentation, relativement peu précise dans ce cas, une méthode de détection de contours permettant d'obtenir la forme générale de la bouche et de localiser un point caractéristique situé au minimum du contour représentant la lèvre inférieure. De la localisation des yeux et de la bouche, on peut ensuite déduire une fenêtre de recherche du nez, dont les bords latéraux sont sensiblement à la verticale du point intérieur des yeux et dont les bords inférieur et supérieur jouxtent ceux des fenêtres relatives aux yeux et à la bouche, puis, en supposant que le visage du personnage est orienté vers la caméra avec un éclairage ne créant pas d'ombres perturbatrices, déduire par segmentation de cette fenêtre du nez la position des narines, en balayant horizontalement cette fenêtre.

On peut enfin définir une fenêtre de recherche du menton par translation de celle de la bouche. Là encore, le contraste autour du menton peut être faible et l'on préfère à la méthode de segmentation ou à celle de détection de contours, une méthode similaire à celle de détermination de la silhouette utilisée initialement, opérant successivement par obtention d'une image de différence à partir de plusieurs images de la séquence, suppression du bruit, et balayage horizontal pour déterminer le minimum de l'arc obtenu qui correspond au bas du menton.

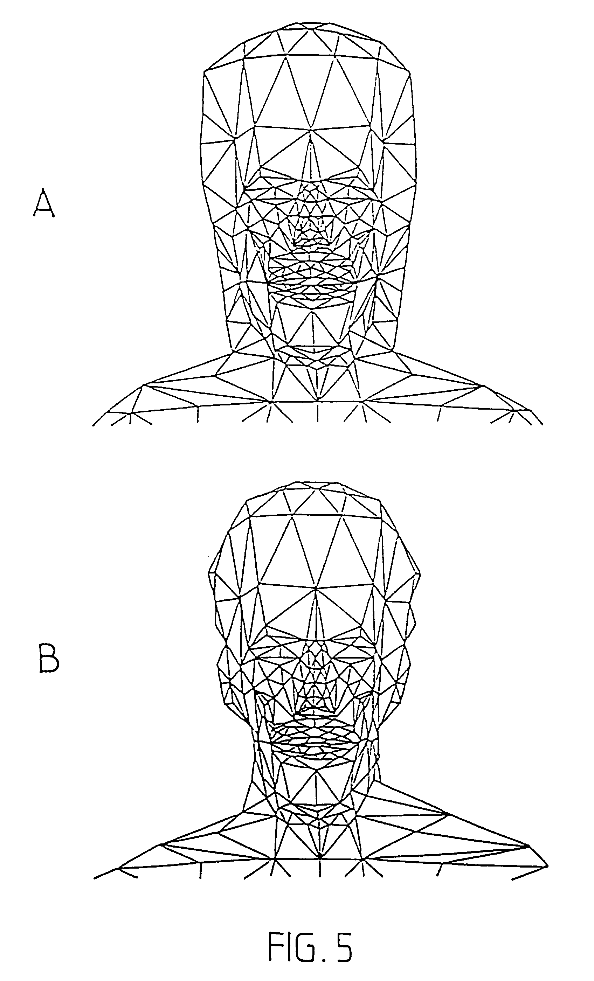

Le circuit 201 d'extraction de points de référence est alors suivi de moyens 202 d'adaptation d'un modèle tridimensionnel de base. Ce modèle, comme indiqué dans le document "Signal Processing : Image Communication" déjà cité, est constitué d'un maillage de nombreuses facettes triangulaires. Chacune de ces facettes est décrite, pour les distinguer, par un numéro de facette FN et trois noeuds de numéros V1, V2, V3 situés aux trois sommets du triangle. Les coordonnées $x_v$, $y_v$, $z_v$ associées à ces noeuds sont définies dans un référentiel lié au modèle. Un exemple d'un tel modèle de base est représenté sur la figure 5A, et la figure 5B montre ce même modèle après réalisation de l'adaptation à un visage réel bien déterminé.

Ce modèle de base est affiché à l'écran dans un système de coordonnées d'écran $x_s$, $y_s$, $z_s$ où l'axe des abscisses est horizontal, l'axe des ordonnées vertical, et l'axe des z perpendiculaire à l'écran (ces coordonnées $x_s$, $y_s$, $z_s$ sont déduites des coordonnées $x_v$, $y_v$, $z_v$ par une transformation matricielle de type classique). Ledit modèle doit être adapté à la séquence d'images, c'est-à-dire que lesdites coordonnées vont être modifiées à partir des points caractéristiques définis précédemment. Les moyens d'adaptation prévus comprennent d'abord un circuit 202 d'alignement sur l'image originale et de mise à échelle. Les repères pour ledit alignement sont ici, horizontalement, le centre du segment joignant les deux tempes et, verticalement, le sommet de la tête. Les déplacements pour aligner le modèle sur l'image originale sont donc :

(a) en abscisse :

$$dx = \frac{1}{2}[(x_v(RT)\text{-}x_v(LT))\text{-}(x_c(RT)\text{-}x_c(LT))]$$

(b) en ordonnée :

$$dy = y_v(HT) - y_c(HT)$$

expressions dans lesquelles :

- $x_v$ et $y_v$ ont déjà été définis ;
- RT et LT se réfèrent à la tempe droite et la tempe gauche respectivement, et HT au sommet de la tête ;
- $x_c$ et $y_c$ désignent les coordonnées du point caractéristique considéré parmi ceux définis précédemment.

Après alignement, le modèle est dilaté pour être représenté à la même échelle que le personnage, en utilisant pour cela les points caractéristiques des tempes, des yeux et du menton, conformément aux expressions suivantes :

$$DIL(X) = (x_c(RT) - x_c(LT))/(x_v(RT) - x_v(LT))$$

$$DIL(Y) = (y_c(CH) - y_c(EY))/(y_v(CH) - y_v(EY))$$

expressions dans lesquelles DIL(X) et DIL(Y) désignent les facteurs multiplicatifs à appliquer aux coordonnées du modèle, et CH et EY se réfèrent respectivement au menton et aux yeux. Eventuellement, $y_c(EY)$ peut être remplacé par une valeur $y_{cm}(EY)$ qui représente la valeur moyenne des coordonnées $y_c(EY)$ pour différents points caractéristiques choisis autour des yeux. En effet, en prenant une valeur moyenne au lieu de la coordonnée d'un seul point, on minimise l'erreur possible sur l'ordonnée d'un de ces points caractéristiques considéré isolément.

Le circuit 202 est alors suivi d'un circuit 203 d'ajustement de régions plus expressives (zones de forte expression, et profils). En effet, l'alignement et la mise à échelle ont conduit à établir entre le modèle et l'image une correspondance qui reste assez approximative puisque seule la position de quelques points a été déterminée. Pour restituer également lesdites régions plus expressives, tous les noeuds du modèle tridimensionnel doivent être ajustés pour décrire au mieux l'image originale. Pour chaque noeud $V_i$, le modèle tridimensionnel comporte donc non seulement des coordonnées $x_{vi}$, $y_{vi}$, $z_{vi}$ mais aussi un numéro ou label qui indique à quelle zone du visage ou du buste appartient ledit noeud (côté de la tête, joues, épaules, nez, yeux, bouche, etc...). Selon la zone, on peut en effet envisager pour chacun de ces noeuds un traitement spécifique :

(a) profil extérieur, côtés de la tête, joues et épaules : ces noeuds sont ajustés sur le contour extérieur de l'image sans fond déterminée précédemment. Ainsi, à chaque noeud du profil extérieur du modèle tridimensionnel doit correspondre un déplacement DEPL(x) le long de l'axe x, à partir duquel on déduit une nouvelle coordonnée $x_v$ pour le noeud $V_i$. Pour les noeuds du côté de la tête, on effectue sur des rangées de pixels voisines du profil extérieur le même type d'alignement, avec en outre un léger décrochement SMSH($V_i$) propre à chaque noeud et qui tient compte de la courbure de la tête ainsi que d'une forme approximative des oreilles. On en déduit alors la nouvelle coordonnée $x_v$ du noeud $V_i$ concerné. Le déplacement DEPL(.) est donné par l'expression :

$$DEPL(x(V_i)) = x_{CTR}(y_S(V_i)) - x_S(V_i) + SMSH(V_i)$$

où $x_{CTR}$(.) représente, pour l'ordonnée correspondant au noeud $V_i$, l'abscisse du contour de l'image sans fond et $x_S(V_i)$ l'abscisse $x_S$ pour le noeud $V_i$. Une procédure similaire est utilisée pour les noeuds des joues et des épaules.
(b) nez, yeux et bouche : ces noeuds sont ajustés en effectuant leur alignement global par rapport aux points caractéristiques respectifs, selon les expressions suivantes :

$$DEPL(y(NN)) = y_{cl}(NN) - y_s(NN)$$

$$DEPL(y(BM)) = y_{cl}(BM) - y_s(BM)$$

$$DEPL(y(YE)) = y_{cl}(YE) - y_s(YE)$$

où DEPL(.) désigne le déplacement de noeud correspondant au nez (NN), à la bouche (BM), ou aux yeux (YE), $Y_{cl}$(.) désigne l'ordonnée du point caractéristique ainsi concerné, et $y_s$(.) désigne, toujours pour le nez, la bouche ou les yeux respectivement, la coordonnée écran du point correspondant pour le modèle tridimensionnel. On effectue ensuite, pour le nez, la bouche ou les yeux, une translation globale définie par ledit déplacement respectivement, et l'on en déduit la nouvelle coordonnée $y_v$ du noeud $V_i$ concerné.

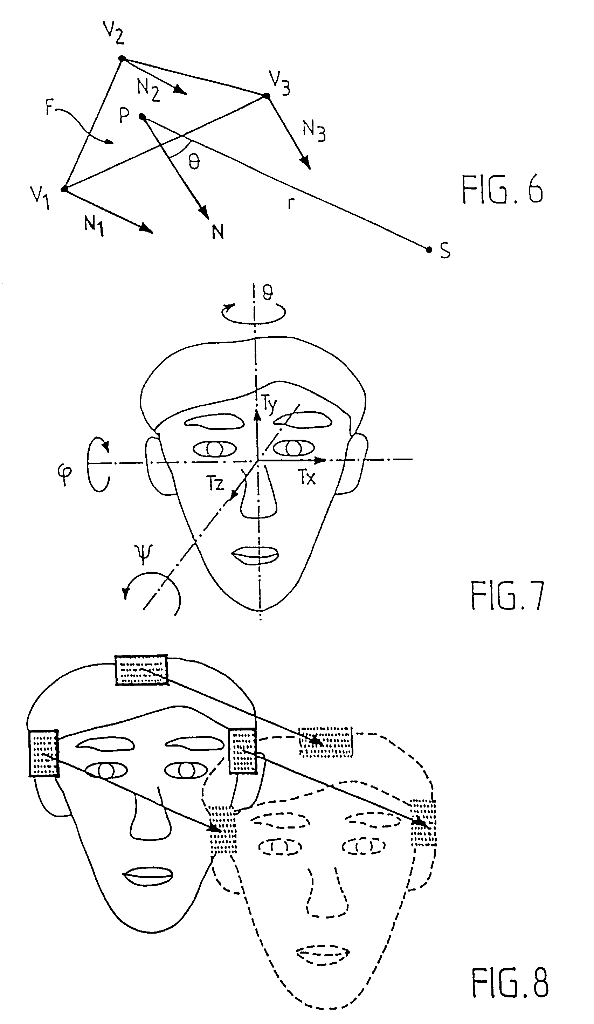

On peut encore perfectionner cet ajustement du modèle tridimensionnel en lui ajoutant un ombrage. On suppose par exemple, pour cela, qu'un éclairement est fourni par une source ponctuelle de lumière S (voir la figure 6) placée à une distance r de la facette F que l'on veut ombrer (de sommets $V_1$, $V_2$, $V_3$), et que cet éclairement est variable selon l'orientation des facettes par rapport à la direction de la source. Si l'on appelle I(AMB) la valeur de l'éclairage ambiant de la scène et I(INC) la valeur de luminance en provenance directe de la source, la valeur de la luminance $I_{OMB}$(F) en un point P quelconque de coordonnées (x,y) de la facette F concernée est alors donnée par la relation suivante :

$$I_{OMB}(F,x,y) = I(AMB) + (I(INC)/r).\cos \theta$$

où, comme indiqué sur la figure 6, l'angle $\theta$ désigne celui que fait le segment PS avec la normale N à la facette. Afin de garantir une continuité de la luminance entre les facettes, on peut d'ailleurs définir artificiellement cette normale N, de la façon suivante : on commence par définir, en chaque sommet $V_1$, $V_2$, $V_3$ de la facette F considérée, une normale qui est la moyenne des normales, en ces sommets, aux facettes adjacentes à F, puis on calcule la normale à F en un point quelconque de F par interpolation des trois normales $N_1$, $N_2$, $N_3$, ainsi définies en chaque sommet.

Le dispositif de codage 400 présent en sortie des dispositifs 200 et 300 comprend, comme on le verra, divers moyens de codage, mais tout d'abord un circuit 420 de codage des diverses informations disponibles en sortie du circuit d'ajustement 203 (à savoir les nouvelles coordonnées des noeuds du modèle tridimensionnel, ainsi que des grandeurs dites coefficients de texture et attachées à chaque facette F). Si l'image de synthèse que l'on veut obtenir tient compte de l'ombrage, elle est alors définie, pour chaque facette, à partir du produit du coefficient de texture correspondant par le coefficient d'ombrage $I_{OMB}$(F) défini plus haut et lié à ladite facette, ce qui se traduit par l'expression suivante :

$$I(SYNTH)_F = I_{OMB}(F) \times CT(F)$$

Le coefficient de texture CT(F) pour la facette F est lui-même déterminé lors de la calibration initiale, à partir de l'image originale $I(SOURCE)_F$ vue de face :

$$CT(F) = I(SOURCE)_F / I_{OMB}(F)$$

Ceci correspond au cas où la réalisation du sous-ensemble de codage est telle que ce dernier est prévu pour transmettre au sous-ensemble de décodage un tableau regroupant tous les coefficients de texture (calculés comme indiqué ci-dessus) pour toutes les facettes, ledit sous-ensemble de décodage reconstruisant alors, à partir de ce tableau conservé en mémoire, l'image de synthèse selon l'expression ci-dessus, en considérant successivement la luminance de chaque point. Ainsi, pour coder une séquence de plusieurs images, il suffit de transmettre une seule fois le tableau de coefficients de texture correspondant à la première image. Ensuite, au cours du mouvement du personnage, les déplacements du modèle entraînent des déformations des facettes qui constituent ce modèle, mais la texture de ces facettes est calculée par interpolation des valeurs initiales des coefficients de texture.

Une autre réalisation du sous-ensemble de codage est possible, dans laquelle, cette fois, on ne transmet pas ledit tableau des coefficients de texture, mais simplement la partie d'image originale correspondante, codée par exemple selon un standard vidéo numérique de type JPEG (cette appellation, de l'anglais Joint Photographic Experts Group, désigne le groupe de normalisation qui a travaillé à l'élaboration de ce standard) qui est adapté à la compression et au codage de données appartenant à des images fixes. Ce standard, décrit dans de nombreux documents, et par exemple dans l'article "Video compression makes big gains", paru dans la revue IEEE Spectrum, octobre 1991, vol. 28, n°10, pp.16-19, prévoit que chaque composante vidéo de l'image est divisée en blocs qui sont alors transformés, selon une transformation orthogonale de type DCT (transformation cosinus discrète, en anglais Discrete Cosinus Transform) en coefficients représentatifs du contenu en fréquence de ces blocs, et eux-mêmes quantifiés puis codés. Avec cet autre mode de réalisation, on transmet ainsi à la fois les informations nécessaires au calcul des coefficients de texture, qui ne seront extraits qu'au niveau du sous-ensemble de décodage et, bien entendu, toujours la partie correspondant au fond des images. Le coût de codage, dans ce cas, est de l'ordre de 0,5 bit/pixel. Là encore, comme dans le cas de la précédente réalisation, pour coder une séquence de plusieurs images, il suffit d'effectuer une seule fois le codage de type JPEG au cours du mouvement du personnage. Cette méthode permet en outre de transmettre toute l'image lors de la phase d'initialisation, c'est-à-dire une image du fond en même temps que les informations de texture.

En ce qui concerne les nouvelles coordonnées des noeuds du modèle, on pourrait transmettre et/ou stocker, en vue du décodage, ces coordonnées elles-mêmes. Il est cependant bien plus économique, en matière de débit de transmission, de considérer que les coordonnées d'origine des noeuds du modèle tridimensionnel sont déjà connues et stockées côté décodage, et de n'envoyer alors, pour transmission et/ou stockage, que les valeurs des différences entre ces coordonnées d'origine et les nouvelles valeurs calculées. En codant ces différences avec un nombre suffisant de bits, par exemple 6, on peut ainsi envisager des déplacements de noeud importants (64 pixels pour 6 bits). La calibration est réalisée pendant une période de temps limitée correspondant par exemple à un nombre déterminé d'images de la séquence. Cette période peut être définie par le commutateur 250 représenté sur la figure 1 et qui bascule du dispositif 200 vers le dispositif 300 après écoulement de cette période. A chaque position du commutateur 250 est associé un signal de mode, qui doit être transmis en même temps que les autres données codées pour que le système de décodage puisse ultérieurement reconnaître la nature des signaux qui lui parviennent. Lorsque cette calibration initiale et le codage des informations de calibration sont achevés, comme indiqué plus haut, c'est le dispositif 300 qui permet la réactualisation desdites informations relatives au modèle tridimensionnel.

Ce dispositif 300, qui reçoit lui aussi (ici par l'intermédiaire du commutateur 250) les signaux numériques correspondant à la partie animée de la séquence d'images et sélectionnés ici par segmentation, comprend tout d'abord un circuit 301 de détermination du mouvement des points caractéristiques du modèle tridimensionnel précédemment construit. Ce circuit 301 doit, à partir des informations du modèle, déterminer les translations et rotations du visage, afin de pouvoir ultérieurement ne coder que les paramètres qui permettront, au décodage, de trouver la position correcte dudit modèle tridimensionnel. Cette description de mouvement en trois dimensions implique de déterminer les mouvements en translation et en rotation du modèle, selon les six degrés de liberté représentés sur la figure 7, où les mouvements en translation sont repérés sur les axes $T_x$, $T_y$, $T_z$ et les mouvements en rotation par les angles $\varphi$, $\theta$, $\Psi$ par rapport à ces axes respectivement.

Pour déterminer les déplacements $dx_i$, $dy_i$ des différents points caractéristiques i par translation et rotation, on va suivre les déplacements de fenêtres définies en des zones caractéristiques du visage, comme indiqué sur la figure 8. En supposant que le personnage reste dans le même plan durant toute la séquence (pour éviter d'avoir à tenir compte de mouvements en profondeur), on recherche pour chaque fenêtre d'une image donnée, comme le montre ladite figure, celle des fenêtres qui lui ressemble le plus à l'intérieur d'une zone de recherche située dans l'image qui suit ladite image donnée, selon un critère de ressemblance qui est par exemple celui de la recherche du minimum de l'erreur absolue. Pour chaque point caractéristique i, les déplacements $dx_i$, $dy_i$ sont finalement donnés par les expressions :

$$dx_i = r(y_i).\cos\theta.d\theta + r(z_i).\cos\Psi.d\Psi + dTx$$

$$dy_i = r(x_i).\cos\varphi.d\varphi + r(z_i).\cos\Psi.d\Psi + dTy$$

où $r(x_i)$, $r(y_i)$, $r(z_i)$ désignent les rayons de rotation pour un point caractéristique i déterminé. En résolvant alors ce système d'égalités pour les différents points caractéristiques i, on obtient les paramètres $d\varphi(.)$, $d\theta(.)$, $d\Psi(.)$, et $dT(.)$, les angles absolus étant déjà connus à partir de l'image précédente. Cette extraction de paramètres permet de réactualiser le modèle tridimensionnel pour prendre en compte les modifications éventuelles de forme de la zone utile.

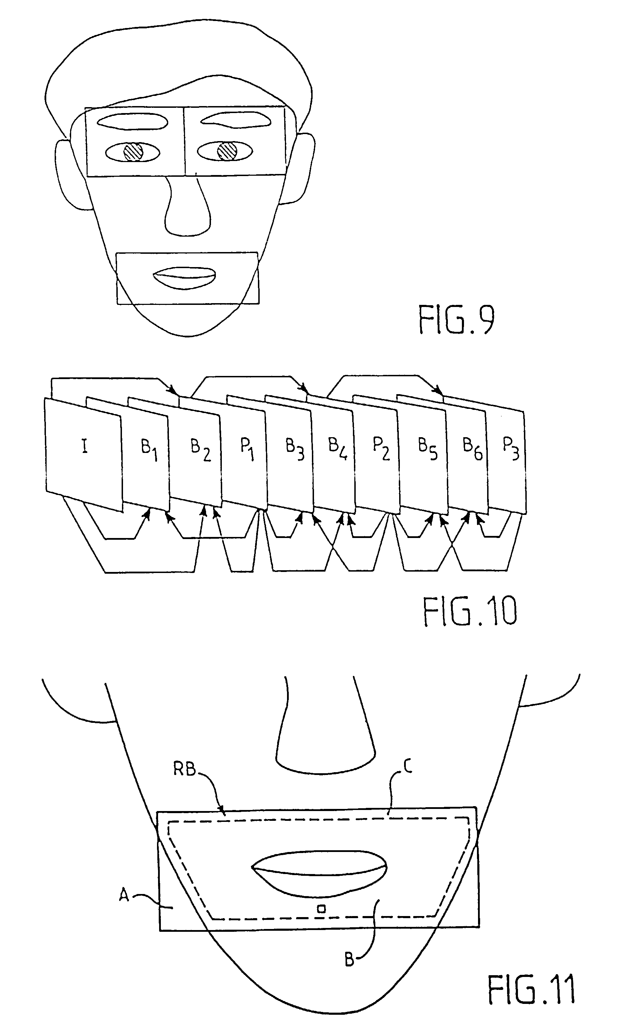

Cependant, et comme on l'a vu, il y a dans cette zone utile, dans le visage, des régions de forte expression faciale dont le rendu doit être le plus fidèle possible, à savoir par exemple celles de la bouche et de chaque oeil. Le codage ultérieur tiendra compte de telles zones dites d'intérêt particulier, qui peuvent être traitées indépendamment ou au contraire dans une seule fenêtre. On a choisi ici, comme indiqué sur la figure 9, de distinguer trois fenêtres séparées, pour chaque oeil et pour la bouche, en incluant éventuellement le nez et une partie des joues, mais le choix plus simple d'une seule fenêtre, ici limitée strictement aux yeux et à la bouche, est possible également. On décrira ci-après ces deux options, mises en oeuvre, dans l'un ou l'autre cas, par un circuit 302 dit de sélection de zones d'intérêt particulier et de détermination de leur mouvement.

Dans le cas d'une seule fenêtre, on retient, selon l'un ou l'autre des trois formats cités plus haut (CIF, QCIF, ou format 4/3), les coordonnées du coin supérieur gauche, notées $(x_G, y_G)$, et celles du coin inférieur droit $(x_D, y_D)$ de la fenêtre, ce qui donne ici par exemple :

(a) format 4/3 :

$$x_G = x_c \text{ (tempe gauche)} + \text{dist } x$$

$$y_G = y_c \text{ (oeil gauche)} - \text{dist } y_1$$

$$x_D = x_c \text{ (tempe droite)} - \text{dist } x$$

$$y_D = y_c \text{ (bouche)} + \text{dist } y_2$$

expressions dans lesquelles $x_c(.)$ et $y_c(.)$ désignent les coordonnées des points caractéristiques, et dist x, dist $y_1$, dist $y_2$ sont des valeurs qui permettent d'ajuster la taille de la fenêtre (pour ce format, on a choisi : dist x = de 0 à 40 pixels, dist $y_1$ = 45, dist $y_2$ = 40).

(b) formats CIF et QCIF : même détermination que dans le cas maintenant examiné de trois fenêtres distinctes.

Dans le cas de trois fenêtres, les coordonnées, pour l'un ou l'autre des trois formats, sont déterminées comme suit :

(a) format 4/3 :

($a_1$) pour la bouche (BO), la fenêtre est définie à partir des points caractéristiques de la bouche et des coins des yeux, toutes les valeurs ci-après, telles que 20, 40, etc... correspondant à des exemples qui ont été testés et vérifiés :

$$x_G(BO) = x_c \text{ (oeil gauche, coin gauche)}$$

$$y_G(BO) = y_c \text{ (bas du nez)} + 20$$

$$x_D(BO) = x_c \text{ (oeil droit, coin droit)}$$

$$y_D(BO) = y_c \text{ (bouche, point inférieur)} + 40$$

($a_2$) pour l'oeil gauche (OG), la fenêtre est définie à partir des points caractéristiques des tempes et des yeux :

$$x_G(OG) = x_c \text{ (tempe gauche)} + 40$$

$$y_G(OG) = y_c \text{ (oeil gauche, coin gauche)} - 35$$

$$x_D(OG) = (x_c(\text{tempe gauche}) + x_c(\text{tempe droite}))/2$$

$$y_D(OG) = y_c(\text{oeil gauche, coin gauche}) + 35$$

(a$_3$) pour l'oeil droit (OD), la fenêtre est définie également à partir des points caractéristiques des tempes et des yeux :

$$x_G(OD) = (x_c(\text{tempe gauche}) + x_c(\text{tempe droite}))/2$$

$$y_G(OD) = y_c(\text{oeil droit, coin droit}) - 35$$

$$x_D(OD) = x_c(\text{tempe droite}) - 40$$

$$y_D(OD) = y_c(\text{oeil droit, coin droit}) + 35$$

(b) en format CIF, les coordonnées de fenêtre sont données par les égalités suivantes (dans lesquelles l'expression "fenêtre concernée" désigne respectivement la fenêtre bouche, la fenêtre oeil gauche, ou la fenêtre oeil droit), telles que définies ci-dessus pour le format 4/3 :

$$x_G(CIF) = (x_G(\text{fenêtre concernée}) + 19)/2$$

$$y_G(CIF) = (y_G(\text{fenêtre concernée}) + 32)/2$$

$$x_D(CIF) = (x_D(\text{fenêtre concernée}) + 19)/2$$

$$y_D(CIF) = (y_D(\text{fenêtre concernée}) + 32)/2$$

(c) en format QCIF, les coordonnées de fenêtre sont de façon similaire données par les égalités suivantes :

$$x_G(QCIF) = (x_G(\text{fenêtre concernée}) + 19)/4$$

$$y_G(QCIF) = (y_G(\text{fenêtre concernée}) + 32)/4$$

$$x_D(QCIF) = (x_D(\text{fenêtre concernée}) + 19)/4$$

$$y_D(QCIF) = (y_D(\text{fenêtre concernée}) + 32)/4$$

La taille de la ou des fenêtres ainsi définies est ensuite adaptée à un multiple MUL de la taille des blocs qui vont être utilisés pour le codage, en l'arrondissant par exemple au nombre entier de blocs immediatement supérieur. Les valeurs $\Delta x$ et $\Delta y$ ainsi ajoutées à la taille réelle de la ou des fenêtres, comprises entre 0 et, au maximum, la taille d'un bloc ou d'un macrobloc, sont réparties uniformément des deux côtés de la fenêtre concernée, ce qui donne de nouvelles coordonnées $X_G$, $Y_G$, $X_D$, $Y_D$ :

$$X_G(fen) = x_G(fen) - \Delta x(fen)$$

$$Y_G(fen) = y_G(fen) + \Delta y(fen)$$

$$X_D(fen) = x_D(fen) + \Delta x(fen)$$

$$Y_D(fen) = y_D(fen) - \Delta y(fen)$$

Enfin, lorsque ces fenêtres sont en mouvement dans une séquence d'images, les coordonnées d'une fenêtre de la trame de rang N sont déduites des coordonnées de fenêtre définies dans la trame de rang (N-1) selon les expressions suivantes :

$$X_G(fen_N) = X_G(fen_{N-1}) - DEPL(x)_{N-1}$$

$$Y_G(fen_N) = Y_G(fen_{N-1}) - DEPL(y)_{N-1}$$

$$X_D(fen_N) = X_D(fen_{N-1}) - DEPL(x)_{N-1}$$

$$Y_D(fen_N) = Y_D(fen_{N-1}) - DEPL(y)_{N-1}$$

dans lesquelles $DEPL(x)_{N-1}$, $DEPL(y)_{N-1}$ représentent les composantes en x et en y du déplacement de la trame N par rapport à la trame (N-1).

La réactualisation des informations utiles est donc réalisée, après la calibration initiale, de la façon qui vient d'être décrite. Il reste, comme dans le cas de ladite calibration, à effectuer un codage, ici le codage des informations de réactualisation. Cette opération est réalisée dans le dispositif de codage 400 par un circuit 431 de codage des informations de sortie du circuit 301 de détermination du mouvement des points caractéristiques et par un circuit 432 de codage des informations de sortie du circuit 302 de sélection de zones d'intérêt particulier.

Le circuit 431 assure le codage, pour chaque point caractéristique, des paramètres qui ont été calculés précédemment, à savoir : $d\theta$, $d\varphi$, $d\psi$, $dTx$, $dTy$, $DEPL(x)$, $DEPL(y)$. Ces paramètres sont par exemple codés sur 5 bits, suivant une séquence déterminée pour les retrouver toujours dans le même ordre. Si les points caractéristiques sont, comme on l'a vu, les tempes gauche et droite, l'oeil gauche et l'oeil droit, et le point inférieur du nez et de la bouche, l'ordre de grandeur du nombre de bits transmis est, dans l'exemple décrit, d'environ 95 bits par image.

Le circuit 432 assure, lui, le codage des informations présentes dans la ou les fenêtres englobant la ou les zones d'intérêt particulier (on décrira ci-après le circuit 432 en parlant plutôt d'une fenêtre, mais la généralisation au cas de plusieurs fenêtres - trois fenêtres séparées, dans l'exemple cité précédemment - est immédiate). La position et la taille de la (de chaque) fenêtre étant bien définies, on stocke en mémoire la portion d'image originale inscrite dans ces fenêtres, en appelant FEN(i,j) chaque portion d'image composée de i lignes et de j colonnes, et l'on appelle image source cette portion d'image originale incluse dans la fenêtre et qui va maintenant être celle soumise au codage.

Le codage de cette image source est ici réalisé selon un mode de codage hybride, du type des standards MPEG et H261 (le standard MPEG - de l'anglais Moving Pictures Expert Group - et le standard H261, recommandé par le CCITT, sont mentionnés dans l'article déjà cité de la revue IEEE Spectrum), en ce sens qu'il combine un codage d'informations de même origine spatiale (ou codage intra) et un codage d'informations n'ayant pas la même origine spatiale (ici codage par prédiction). Dans le codage dit intra, les informations codées sont propres à une seule et même image, tandis que, dans le codage par prédiction, la prédiction est dite simple si le codage assure une compensation de mouvement unidirectionnelle, à partir d'images par exemple antérieures à celle en cours de codage (c'est le cas des standards H261 et MPEG), ou bidirectionnelle si le codage assure une compensation de mouvement bidirectionnelle à partir d'images antérieure(s) et postérieure(s) à celle en cours de codage (c'est le cas du standard MPEG uniquement). Ce principe de codage de l'image source est bien adapté au codage des zones de forte expression faciale, qui, on l'a vu, sont les zones du visage les plus intéressantes mais subissant les déplacements les plus importants.

Pour ce codage d'images animées, il faut donc stocker en permanence, dans le cas d'un codage de type H261, les images originales de rang n et n-1, ou bien, dans le cas ici décrit d'un codage de type MPEG, les images originales de rang n(=image courante), n-1, n-2 et n-3, ce qui est réalisé dans le circuit 432. On considère en outre que le codage est effectué par groupes d'images, les groupes successifs constituant la séquence d'images résultant de la prise de vues d'origine. Chaque groupe d'images est lui-même constitué de plusieurs images, en nombre N compris par exemple entre 8 et 16, et débute toujours par une image codée en intra. La figure 10 montre pour N=10 un exemple d'un tel groupe, dans lequel les images $P_3$, $P_2$, $P_1$ sont déduites respectivement des images $P_2$, $P_1$ et I (image initiale codée en intra) par prédiction simple, et les images $B_1$ à $B_6$ sont déduites chacune d'une image antérieure et d'une image postérieure par prédiction bidirectionnelle ($B_1$ et $B_2$ sont déduites de I et $P_2$ ; $B_3$ et $B_4$ de $P_1$ et $P_2$ ; $B_5$ et $B_6$ de $P_2$ et $P_3$). Les flèches portées sur la figure 10 sont destinées à mettre en évidence ce mode de prédiction simple ou bidirectionnelle. Ces précisions étant données, on ne décrira pas davantage ce codage d'images animées, décrit, comme on vient de le rappeler, dans différents documents, notamment l'article "Video compression makes big gains" déjà cité (revue IEEE Spectrum, octobre 1991).

Ces codages spécifiques du modèle tridimensionnel en mouvement et des fenêtres d'intérêt particulier étant ainsi assurés par les circuits 431 et 432, il faut observer que les informations spécifiques codées sont d'origine différente : celles codées par le circuit 431 sont, à un instant donné, des informations de même origine spatiale (mise à jour périodique des coordonnées des points caractéristiques du modèle), tandis que celles codées par le circuit 432 sont, on l'a vu, d'origine plus complexe (images codées en intra, images obtenues par prédiction simple, images interpolées obtenues par prédiction bidirectionnelle). En outre, on observe que les luminances à l'intérieur et à l'extérieur des fenêtres ne coïncident pas nécessairement, en raison du choix des valeurs de luminance I(AMB) et I(INC) effectué pour la détermination de l'ombrage du modèle tridimensionnel. En effet, ce choix ne reflète pas nécessairement les caractéristiques d'éclairement présentes lors de la prise de vues, et la superposition telle quelle de la ou des fenêtres codées sur l'image de synthèse qui est obtenue à partir de l'adaptation des points caractéristiques du modèle tridimensionnel laisse donc apparaître, du fait de cette différence d'éclairement, la frontière entre les deux régions.

Pour éviter ce décalage de luminance entre l'image de synthèse et l'image dans les fenêtres, l'ensemble de codage et de décodage qui fait l'objet de la présente description prévoit de le corriger, et cette correction dans la ou les fenêtres concernées peut être effectuée soit dans le sous-ensemble de décodage d'images visiophoniques, soit dans le sous-ensemble de codage. Dans le premier cas, le dispositif de codage 400 n'a pas à prévoir ladite correction. Dans le second cas, le dispositif de codage 400 comprend un circuit 433 de correction de décalage de luminance qui opère comme suit.

Ce circuit 433 détermine d'abord la zone dite efficace qui est inscrite dans chaque fenêtre et qui contient réellement l'image de synthèse, afin d'exclure les parties de fenêtres qui dépasseraient éventuellement du visage lui-même (un exemple d'un tel dépassement, de part et d'autre de la bouche, est représenté sur la figure 9). On évite ainsi de prendre en compte une zone n'appartenant pas au visage et dont la luminance, très différente de celle des pixels du visage, fausserait les calculs ultérieurs. Cette zone efficace est ici délimitée en x et en y de la façon suivante :

(a) en x : du côté gauche, par une valeur d'abscisse notée x(MIN) et qui est égale soit à l'abscisse du côté gauche de la fenêtre considérée, soit, si la fenêtre déborde du visage, à l'abscisse du premier pixel non nul de l'image de synthèse en partant du bord gauche de cette fenêtre, et, du côté droit, par une valeur d'abscisse notée x(MAX) et qui, de façon similaire, est égale soit à l'abscisse du côté droit de la fenêtre considérée, soit, si la fenêtre déborde du visage, à l'abscisse du premier pixel non nul de l'image de synthèse en partant du bord droit de cette fenêtre ;
(b) en y : du côté supérieur, par une valeur d'ordonnée notée y(MAX) et qui est celle du bord supérieur de la fenêtre considérée et, du côté inférieur, par une valeur d'ordonnée notée y(MIN) et qui est celle du bord inférieur de la fenêtre.

Après la détermination de cette zone efficace, le circuit 433 calcule le décalage moyen de luminance entre l'image source dans la fenêtre considérée et l'image de synthèse. Ce calcul est effectué dans une petite zone, en général carrée, située pour chaque fenêtre dans une zone de luminance relativement uniforme aussi bien pour l'image de synthèse que pour l'image dans la fenêtre, en évitant donc les zones riches en contours ou en contraste telles que le voisinage immédiat des yeux et de la bouche (dans de telles zones, les images source et de synthèse sont très différentes et l'estimation d'un décalage de luminance global pour toute la fenêtre concernée n'aurait plus de signification).

La petite zone ici retenue (voir les figures 11 à 13) est un carré de quelques pixels (2 pixels en format CIF ou QCIF, 5 pixels en format 4/3) situé en bas et au milieu de la fenêtre, position où la luminance est effectivement assez uniforme. La luminance moyenne, dans ce carré, de l'image source est notée I(SOURCE) et la luminance moyenne dans ce même carré mais considéré dans l'image de synthèse est notée I(SYNTH). La différence de ces luminances donne alors, pour la fenêtre considérée, le décalage moyen entre les deux images, noté OFFSET(f), selon l'expression suivante :

$$OFFSET(f) = [\sum_{1}^{n} (I(SOURCE) - I(SYNTH))]/n$$

dans laquelle n désigne le nombre de pixels dans la petite zone, ici carrée, considérée, et f se réfère à la fenêtre concernée. Le décalage moyen ainsi calculé est adopté pour toute cette fenêtre.

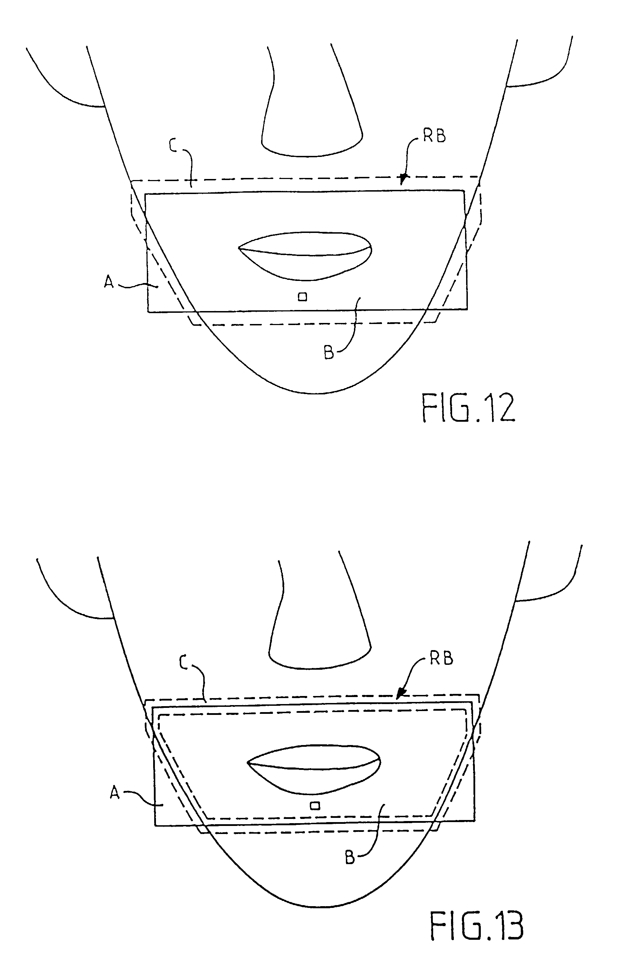

La correction de décalage de luminance (par le circuit 433) peut alors être réalisée, en se référant aux figures 11 à 13 et à la description correspondante qui suit. On définit d'abord une région de bord RB, de largeur ici égale à quelques pixels (ici 5, 3, ou 10 pixels, selon qu'il s'agit du format CIF, QCIF, ou 4/3), qui court tout le long du bord de chaque fenêtre, et qui constitue une zone de transition dans laquelle, pour effectuer ladite correction, on va faire varier la luminance, ici de façon linéaire, en créant une sorte de dégradé. Cette zone de transition, est, dans l'exemple ici décrit, un ruban dont les bords sont parallèles à la frontière de la fenêtre, et qui est de préférence situé tout entier à l'intérieur de la fenêtre concernée, comme le montre la figure 11. Ce ruban peut cependant, aussi, être situé tout entier à l'extérieur de la fenêtre, comme le montre la figure 12, ou bien peut chevaucher la frontière de la fenêtre, comme le montre la figure 13.

Dans le premier cas (figure 11), la luminance dans la fenêtre, après correction, est donnée par l'expression suivante :

$$I_1(FEN/CORR) = I(SOURCE)_{i,j} + VALCOR$$

expression dans laquelle :

- $I_1(FEN/CORR)$ désigne la valeur corrigée de la luminance ;
- $I(SOURCE)_{i,j}$ désigne la valeur de la luminance de l'image source au point de coordonnées (i,j) considéré dans ladite zone de transition ;
- VALCOR désigne la valeur correctrice du décalage, qui doit être considérée avec son signe (l'image de synthèse en dehors de la fenêtre peut être plus lumineuse ou moins lumineuse que l'image source), et qui prend différentes valeurs notées $VALCOR_1$, $VALCOR_2$, $VALCOR_3$ selon le point (i,j) considéré :

(a) hors de la zone du visage (zone A sur la figure 11), cette valeur est donnée en tout point par :

$$VALCOR_1 = I(SYNTH)_{i,j} - I(SOURCE)_{i,j}$$

(b) dans toute la zone de la fenêtre qui se trouve (zone B) à l'intérieur du bord intérieur de la zone de transition (excepté les points qui, éventuellement, sont déjà hors de la zone du visage et donc traités selon le cas (a) ci-dessus), cette valeur est constante et donnée par :

$$VALCOR_2 = OFFSET(f)$$

(c) entre ledit bord intérieur de la zone de transition et le bord de la fenêtre (zone C), la valeur $VALCOR_3$ varie linéairement entre ces deux valeurs $VALCOR_2$ et $VALCOR_1$.

En fait, les bords des fenêtres sont ici parallèles aux axes x, y définis, et ladite variation est dans ce cas une variation linéaire avec la seule coordonnée horizontale x lorsqu'on se trouve le long des frontières latérales gauche et droite de la fenêtre, ou une variation linéaire avec la seule coordonnée verticale y lorsqu'on se trouve le long des frontières latérales inférieure et supérieure de la fenêtre. Dans le deuxième cas (figure 12) ou dans le troisième cas (figure 13), c'est un calcul rigoureusement similaire qui permet de déterminer la valeur de correction à apporter à la luminance (les zones A, B, C sont définies de façon similaire). On précisera enfin que le décalage moyen OFFSET(f) ne varie en général que relativement peu d'une fenêtre à l'autre. Cette différence serait cependant perceptible et inesthétique sur l'image finalement reconstituée, et il est préférable de choisir une même valeur de décalage moyen pour chacune des fenêtres, en prenant leur moyenne par exemple, et en écartant éventuellement du calcul de cette moyenne l'une des valeurs de décalage moyen si elle s'avérait être très différente des autres.

La correction de luminance étant ainsi effectuée, le circuit 432 du dispositif de codage 400 assure désormais, dans la ou les fenêtres, le codage non plus des valeurs de luminance de l'image source mais de ces mêmes valeurs corrigées comme on vient de l'indiquer ci-dessus. Il reste alors à assurer en sortie du dispositif de codage 400, vers le canal CL de transmission et/ou de stockage représenté sur la figure 1, une présentation séquentielle appropriée des informations codées, par exemple dans l'ordre suivant : signaux indiquant qu'on est en phase de calibration ou au contraire de réactualisation, paramètres de codage caractéristiques du modèle tridimensionnel, paramètres de codage spécifiques aux fenêtres, signal de fin d'image, etc... Une telle opération de présentation séquentielle, dite de formatage, est de type classique et ne sera pas davantage détaillée, des variations sensibles de présentation des données codées ne remettant en aucune manière en cause les principes de fonctionnement précédemment décrits.

Les moyens de codage décrits jusqu'à présent sont suffisants pour permettre ultérieurement, au décodage, une reconstitution d'image de qualité satisfaisante lorsque les visages de la séquence d'images sont vus de face ou sous de faibles angles. En effet, la correction de décalage de luminance à la frontière entre les deux zones de la partie utile des images gomme les discordances éventuelles de restitution d'image qui pourraient résulter de cette association de deux procédés de codage distincts à l'intérieur d'une même image.

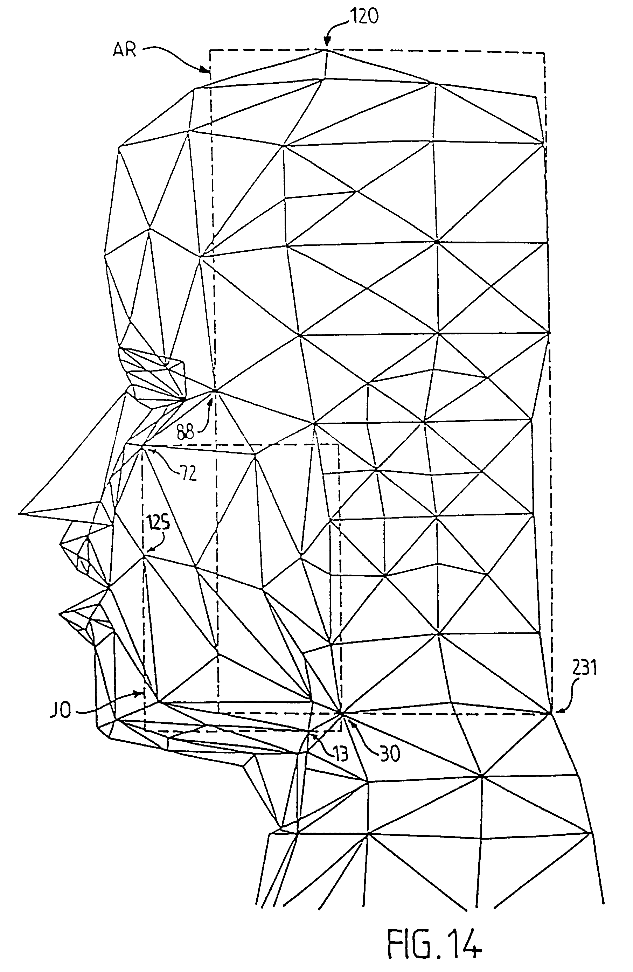

En revanche, une dégradation d'une autre partie de l'image peut être observée dans certaines circonstances : à la transition entre le fond fixe de l'image et le personnage en mouvement, le modèle tridimensionnel initialement calibré n'est plus assez précis pour s'adapter aux mouvements de ce personnage si celui-ci effectue des rotations importantes de la tête, par exemple des rotations (autour d'un axe vertical) supérieures à 15 degrés à gauche ou à droite. Des facettes latérales, notamment, peuvent apparaître (celles qui incluent les oreilles, l'arrière de la tête) et la calibration initiale n'a pas pris en compte d'informations les concernant. Par ailleurs, certaines facettes situées sur les joues peuvent nécessiter l'envoi de nouvelles informations. La figure 14 montre plus particulièrement, sur le modèle tridimensionnel vu de profil, ces deux zones, la zone AR incluant les oreilles et les cheveux et la zone JO incluant les joues.

Pour remédier à cette dégradation locale de qualité d'image, une opération de rafraîchissement peut être proposée, en précisant préalablement que ce rafraîchissement doit être effectué à une cadence qui établit un compromis entre la qualité d'image (supposant des rafraîchissements fréquents) et le volume de données à transmettre (qui doit être réduit au minimum en espaçant le plus possible ces rafraîchissements). On a vu précédemment que la calibration du modèle tridimensionnel avait consisté à réaliser, à partir des noeuds et facettes de ce modèle de base, un ajustement sur les images originales du début de séquence, complété par la mise en place d'un ombrage, et que l'image de synthèse pouvant ensuite être obtenue était alors définie, pour chaque facette du modèle, par le produit d'un coefficient de texture CT et de la valeur d'éclairement $I_{OMB}(F)$ propres à cette facette F, le coefficient de texture étant lui-même défini à partir de l'image originale vue de face. Cette définition de l'image de synthèse pour une facette F est résumée par l'expression suivante :

$$I(SYNTH)_F = I_{OMB}(F) \times CT(F)$$

et celle de CT(F) par l'expression suivante :

$$CT(F) = I(SOURCE)_F/I_{OMB}(F)$$

Les coefficients de texture correspondant aux facettes cachées ou à certaines facettes latérales qui sont profondément modifiées lors de fortes rotations du visage ne sont donc pas connus. Pour les déterminer, une reprise périodique de la calibration initiale pourrait être effectuée, mais on observe dans ce cas qu'il apparaît progressivement des discontinuités de luminance entre facettes voisines.

Le sous-ensemble de codage comprend alors, pour remédier à ce problème, un dispositif 500 de correction de calibration, représenté lui aussi sur la figure 1 et comprenant lui-même d'une part des moyens 510 de détection d'écart de luminance (ou de chrominance respectivement) entre l'image de synthèse et l'image originale, d'autre part des moyens 520 de rafraîchissement de données selon les résultats de ladite détection, et enfin, dans le dispositif de codage 400, des moyens 530 de codage des nouvelles informations ainsi obtenues. Ces moyens 510 à 530 forment un bloc autonome qui n'est pas nécessairement prévu dans toutes les circonstances mais seulement dans le cas de l'application particulière signalée plus haut, pour remédier à la dégradation de qualité d'image observable dans le cadre de cette application.

Dans un premier mode de réalisation, les moyens de détection 510 comprennent un circuit de calcul de l'erreur moyenne entre l'image de synthèse et l'image originale. Cette erreur moyenne $ERR_M(.)$ est évaluée pour chaque image selon l'expression suivante :

$$ERR_M(ZC) = \sum_{1}^{N_F} \sum_{1}^{N_P} (I(SYNTH)_{F(i)} - I(SOURCE)_{F(i)})^2 / N_P$$

dans laquelle ZC indique la zone concernée (dans le cas présent, la zone AR ou la zone JO), $N_F$ le nombre de facettes dans cette zone, et $N_P$ le nombre de pixels de la facette concernée F(i). Si aucun rafraîchissement n'était prévu, l'erreur moyenne augmenterait au fur et à mesure de l'apparition des facettes latérales et serait maximale lorsque ces facettes présenteraient la plus grande surface. La décision d'effectuer, ou non, un tel rafraîchissement est prise ici en comparant cette erreur moyenne à un seuil THRE5 : si l'erreur moyenne $ERR_M(ZC)$ lui est supérieure, le rafraîchissement a lieu pour cette zone, par un nouvel envoi de paramètres de texture. Lorsque cet envoi est terminé, l'erreur moyenne diminue, et un envoi ultérieur de nouveaux paramètres de texture ne redeviendra nécessaire que pour des rotations très supérieures. Le seuil THRE5 est ajusté en fonction du compromis souhaité entre la qualité d'image recherchée et le volume des données à transmettre.

Dans un deuxième mode de réalisation, les moyens de détection 510 comprennent un circuit de détection angulaire : selon l'orientation des facettes du modèle par suite de la rotation (d'un angle θ) autour de l'axe vertical, on procède ou non au rafraîchissement. Pour les facettes du côté de la tête et des oreilles (zone AR), on constate en général qu'il faut au moins deux rafraîchissements, l'un pour un angle modéré, de l'ordre de 20° par exemple, et l'autre pour un angle de 35° environ si l'on veut, dans le cas d'un visage, bien décrire la forme des oreilles. Les informations dans la zone JO sont moins riches en contours et en textures et un seul rafraîchissement, de l'ordre de 35°, peut éventuellement suffire.

Dans un troisième mode de réalisation, les moyens de détection 510 comprennent un circuit de calcul, pour une facette donnée, du rapport entre le nombre de coefficients de texture déterminés par interpolation des valeurs initiales de ces coefficients de texture et le nombre de ces coefficients de texture initiaux, ou bien du rapport moyen ainsi établi pour la totalité des facettes dans une zone considérée (zone AR, ou zone JO).

La décision de correction de calibration, dite encore décision de rafraîchissement, étant ainsi prise, il faut assurer le codage de ces éventuelles informations de rafraîchissement. Ce codage est maintenant décrit, par exemple dans le cas où les coefficients de texture ne sont pas codés dans le sous-ensemble de codage mais redéfinis dans le sous-ensemble de décodage à partir du codage d'une partie de l'image originale (ou image source). Là encore, on peut distinguer par exemple le cas de la zone AR (oreilles + cheveux de l'arrière de la tête) et celui de la zone JO (joues).

Pour la zone AR, on délimite la zone à rafraîchir par une fenêtre sensiblement rectangulaire, à l'intérieur de laquelle va être effectué un codage avec transformation DCT préalable. Les coordonnées de la fenêtre choisie sont définies par exemple, comme indiqué sur la figure 14, par les points extrêmes de la zone à rafraîchir, c'est-à-dire, dans le cas représenté, pour les points suivants :

- point extrême gauche $P_{EG}$ :

$$x_{EG} = x(88)$$

- point extrême supérieur $P_{ES}$ :

$$y_{ES} = y(120)$$

- point extrême droit $P_{ED}$ :

$$x_{ED} = x(231)$$

- point extrême inférieur $P_{EI}$ ;

$$y_{Ei} = y(231)$$

Dans ces expressions, x(.), y(.) représentent respectivement l'abscisse et l'ordonnée du point ayant sur la figure 14 le numéro indiqué entre parenthèse, parmi la totalité des noeuds du modèle qui sont tous ainsi numérotés (mais ces numéros des autres noeuds ne sont pas représentés, pour ne pas surcharger la figure).

La taille de la fenêtre ainsi définie est ensuite adaptée à un multiple de la taille des blocs (ici blocs de 8 x 8 pixels) utilisés pour le codage avec transformation DCT, en l'arrondissant à un nombre entier de blocs, ici à l'entier supérieur comme précédemment. Le codage est alors effectué (codage de type JPEG, avec transformation DCT), un ordre de grandeur du coût de ce codage étant, pour les différents formats considérés dans la présente description, donné par le tableau suivant :

|  |  | $\Theta =$ | 15° | 30° |
|---|---|---|---|---|
| Avant codage | CIF (octets) | | 4500 | 7400 |
| Avant codage | QCIF (octets) | | 1150 | 1800 |
| Après codage | CIF (bits) | | 1916 | 4400 |
| Après codage | QCIF (bits) | | 1500 | 2340 |
| Temps de transmission | CIF(secondes) | | 0,3 | 0,6 |
| Temps de transmission | QCIF(secondes) | | 0,2 | 0,3 |

Les valeurs données ci-dessus sont bien entendu uniquement indicatives des essais effectués, le taux de codage sur les fenêtres CIF étant estimé à environ 0,6 bit/pixel et celui sur les fenêtres QCIF à environ 1,3 bit/pixel. Les valeurs de temps de transmission sont déterminées en admettant une cadence de transmission de 7 kilobits/seconde pour une image. Pour assurer rapidement cette transmission, on donne momentanément la priorité aux données de rafraîchissement en arrêtant de transmettre les bits de codage tant que dure ledit rafraîchissement et en rétablissant cette transmission lorsqu'il est terminé. Cette interruption de transmission touche un nombre d'images déterminé mais limité, par exemple six images, ce qui correspond à une durée de l'ordre de 0,6 seconde. Bien entendu, on doit indiquer dans quelle phase on se trouve, et un paramètre indicateur de mode placé en tête des données fournit cette information, en prenant par exemple la valeur 1 si un rafraîchissement est en cours, ou la valeur 0 en l'absence de rafraîchissement ou lorsque celui-ci est terminé.

Pour la zone JO, on procède de manière similaire en délimitant également une fenêtre sensiblement rectangulaire, déterminée, comme indiqué sur la figure 14, par les coordonnées de ses points extrêmes définies comme précédemment, à savoir par exemple ici :

- point extrême gauche $P_{EG}$ :

$$x_{EG} = x(125)$$

- point extrême supérieur $P_{ES}$ :

$$y_{ES} = Y(72)$$

- point extrême droit $P_{ED}$ :

$$x_{ED} = x(30)$$

- point extrême inférieur $P_{EI}$ :

$$y_{EI} = y(13).$$

L'adaptation de taille de la fenêtre et son codage sont alors réalisés comme ci-dessus, une estimation indicative du coût de ce codage étant la suivante :

|  |  | $\Theta =$ | 15° | 30° |
|---|---|---|---|---|
| Avant codage | CIF (octets) | | 3200 | 3800 |
| Avant codage | QCIF (octets) | | 800 | 950 |
| Après codage | CIF (bits) | | 1920 | 2270 |

(suite)

|  | $\Theta =$ | 15° | 30° |
|---|---|---|---|
| Après codage — QCIF (bits) | | 1040 | 1230 |
| Temps de transmission — CIF (secondes) | | 0,27 | 0,3 |
| Temps de transmission — QCIF (secondes) | | 0,15 | 0,17 |

Bien que plus réduits par rapport au cas de la zone AR, les temps de transmission peuvent ici paraître encore assez importants alors que la luminance (ou la chrominance) sur les joues est ou varie de façon relativement continue. On peut alors envisager de décrire l'intensité sur chaque facette par une interpolation linéaire entre les intensités aux trois sommets de cette facette considérée. La luminance I(PIXEL) en un point quelconque de l'intérieur d'une facette est alors exprimée en fonction de sa position par rapport aux arêtes gauche et droite de cette facette, selon une expression du type :

$$I(PIXEL) = a\,L + b\,R$$

dans laquelle a et b sont des coefficients, et L et R les intensités interpolées sur l'arête gauche et sur l'arête droite respectivement, ces intensités étant elles-mêmes liées aux trois intensités sur les extrémités des arêtes. Cette possibilité d'interpolation permet de ne coder et transmettre que les intensités desdites extrémités d'arêtes et conduit donc à une diminution très importante du coût de codage (si par exemple on interpole les intensités sur 15 facettes à partir des intensités sur 13 extrémités d'arête, le coût de codage est de 13 x 8 = 104 bits, pour 2000 bits en l'absence d'interpolation, soit un rapport de 20).

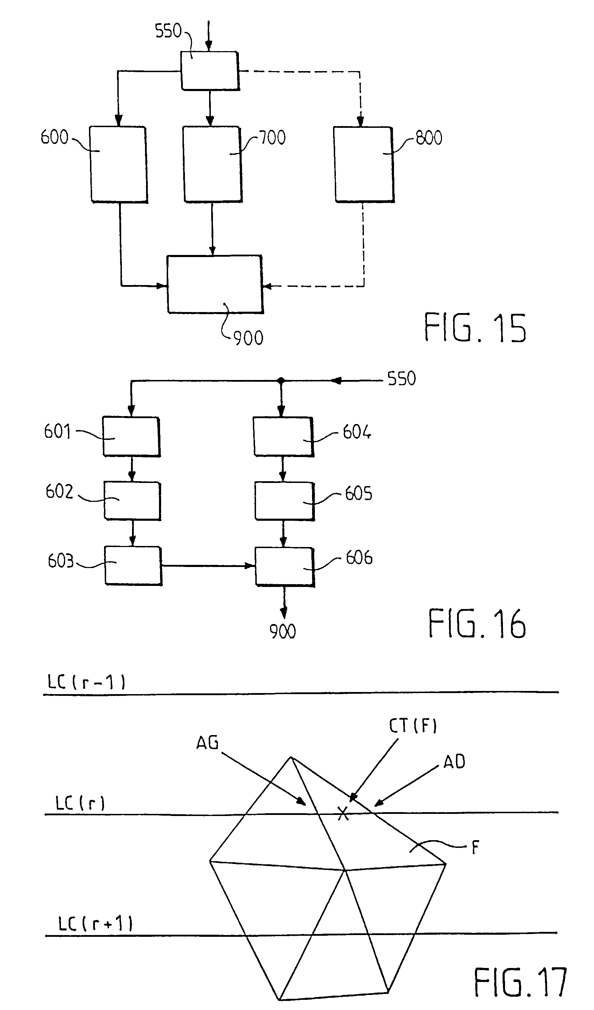

On vient ainsi de décrire, en référence aux figures 1 à 14, un exemple de réalisation d'un sous-ensemble de codage d'images visiophoniques, avec indication le cas échéant de variantes possibles pour certains éléments de ce système. Réciproquement, lorsque des images ont été traitées par un sous-ensemble de codage de ce type en vue d'une transmission à très bas débit et/ou d'un stockage avec un taux de compression de données élevé, les signaux codés correspondant à de telles images d'origine peuvent être reçus par un sous-ensemble de décodage de signaux dont un schéma simplifié de réalisation est représenté sur la figure 15. Ce sous-ensemble de décodage comprend d'une part un circuit 550 de détection de mode de fonctionnement et d'autre part, en sortie de ce circuit, des étages 600 et 700 de décodage des informations de calibration initiale et de décodage des informations de réactualisation respectivement, ces étages étant en parallèle l'un avec l'autre.

Le circuit 550 de détection de mode est ici un commutateur destiné à recevoir sur son entrée un signal situé en tête des données transmises et dont la sortie est reliée, selon le mode de fonctionnement du sous-ensemble de codage indiqué par ce signal d'entrée, soit à l'entrée de l'étage 600 de décodage des informations de calibration initiale, soit à l'entrée de l'étage 700 de décodage des informations de réactualisation. On verra plus loin que, s'il y a eu rafraîchissement dans le sous-ensemble de codage, le signal d'entrée du commutateur l'indique également : la sortie de ce commutateur est alors reliée (connexion en trait interrompu, sur la figure 15) à l'entrée d'un étage 800 de décodage des informations de rafraîchissement, prévu également en parallèle. On décrira donc successivement les étages 600 et 700, puis l'étage 800.

L'étage 600 de décodage des informations de calibration initiale, représenté sur la figure 16, comprend tout d'abord, en sortie du circuit 550, un circuit 601 de mémorisation des paramètres initiaux, pour la mise à l'échelle du modèle tridimensionnel de base. Les opérations effectuées dans ce circuit 601 sont expliquées ci-après. Tout d'abord, on teste si l'on est ou non en début de transmission : si la réponse est OUI, le dispositif 600 reçoit les positions initiales notées $\theta_i$, $\varphi_i$, $\psi_i$, $Tx_i$, $Ty_i$ de chaque noeud du modèle puis les paramètres $dx_i$, $dy_i$, $dz_i$ de modification des coordonnées de ces noeuds (typiquement 500 noeuds dans le cas de l'exemple ici décrit), ce qui permet la mise à l'échelle effective du modèle. Si l'on n'est plus en début de transmission (réponse NON après le test), le circuit 601 doit vérifier en permanence la présence éventuelle d'un code "nouvelle image" et, dans ce cas, interrompre la réception des informations codées "image initiale" pour recevoir des modifications $d\theta$, $d\varphi$, $d\psi$, $dTx$, $dTy$ des paramètres $\theta$, $\varphi$, $\psi$, $Tx$, $Ty$ et calculer les nouveaux paramètres compte tenu de ces modifications. Ces variations de position et d'orientation serviront à connaître la position courante du modèle au début du décodage des informations de réactualisation.

Le circuit 601, qui devient transparent lorsqu'il a reçu et traité lesdits paramètres initiaux, est suivi d'un circuit 602 de calcul et de mémorisation des informations d'adaptation du modèle. Ce circuit 602 permet l'adaptation du modèle tridimensionnel initial, caractérisé par les coordonnées des noeuds, à partir des variations transmises des coordonnées de ces noeuds. Les nouvelles valeurs sont conservées en mémoire dans ce circuit 602 pour être utilisées lors de la génération de toutes les images de synthèse. Le circuit 602 est lui-même suivi d'un circuit 603 de calcul des coordonnées initiales, qui correspondent à l'orientation initiale (c'est-à-dire à l'orientation de l'image initiale transmise, en vue d'appliquer au modèle tridimensionnel les rotations initiales éventuelles). Ces rotations initiales (éventuelles) sont ainsi appliquées au modèle tridimensionnel, et les nouvelles valeurs x', y', z' obtenues sont stockées en tant que nouveau modèle tridimensionnel. On en déduit, par simple translation, des coordonnées $x_o$, $y_o$, $z_o$ liées à l'observateur, puis des coordonnées d'écran $x_e$, $y_e$, $z_e$ par simple homothétie de ces coordonnées $x_o$, $y_o$, $z_o$. C'est dans ce système de coordonnées d'écran que l'image de synthèse sera calculée, puis affichée à l'aide d'un étage d'affichage vidéo 900 prévu en sortie des étages 600, 700, et éventuellement 800.

L'étage 600 comprend d'autre part, également en sortie du circuit 550, un circuit 604 de réception et de décodage de la ou des fenêtres initiales de la séquence d'images transmise. La réception des mots de code correspondants dépend bien entendu de la manière dont le codage a été effectué. Dans le cas où ce codage a fait appel à une transformation orthogonale (du type transformation cosinus discrète DCT) suivie d'un codage à longueur variable, et par exemple suivant une norme telle que le standard JPEG déjà mentionné, le décodage intervient bien évidemment de façon réciproque, c'est-à-dire, ici, suivant cette même norme JPEG.

Le circuit 604 est suivi d'un circuit 605 de calcul des coefficients de texture CT. On a vu que ce calcul est effectué à partir de l'image initiale I(SOURCE) (ici l'image initiale décodée) et de la luminance $I_{OMB}$(F) du modèle d'ombrage calculée en chaque point de chaque facette F. Pour balayer chaque facette, on balaie successivement (méthode dite du "scan-line", illustrée à l'aide de la figure 17) chaque ligne d'écran à partir du haut, les facettes successivement rencontrées sur la ligne courante (notée ici LC(r)) étant traitées successivement. A l'intérieur de chaque facette, le calcul est effectué depuis l'arête gauche AG jusqu'à l'arête droite AD, en calculant d'abord pour le point X concerné la luminance $I_{OMB}$(F), comme indiqué précédemment en référence à la figure 6, puis en calculant les coefficients CT (F) attachés à chaque facette. Ces coefficients CT(F) sont alors stockés en mémoire, en vue de leur utilisation dans la détermination des images de synthèse.

L'étage 600 comprend enfin, en sortie des circuits 603 et 605, un circuit 606 de calcul d'image de synthèse. Les sorties des circuits 603 et 605 sont reçues en parallèle par le circuit 606, dont la sortie est elle-même fournie à un étage d'affichage 900 de type classique. Pour le calcul des images de synthèse, le remplissage de chaque facette est effectué ligne après ligne par la même méthode du "scan-line", la luminance de l'image de synthèse calculée pour chaque facette étant, on l'a vu, donnée par l'expression :

$$I(SYNTH)_F = I_{OMB}(F) \times CT(F)$$

Les facettes cachées sont éliminées de l'affichage des images de synthèse à l'aide d'une méthode faisant appel au calcul de la profondeur z du point courant. Seuls les points les plus proches (en z) de l'observateur sont pris en compte pour l'affichage, et les images de synthèse sont donc données par les valeurs de $I(SYNTH)_F$ pour z minimum.

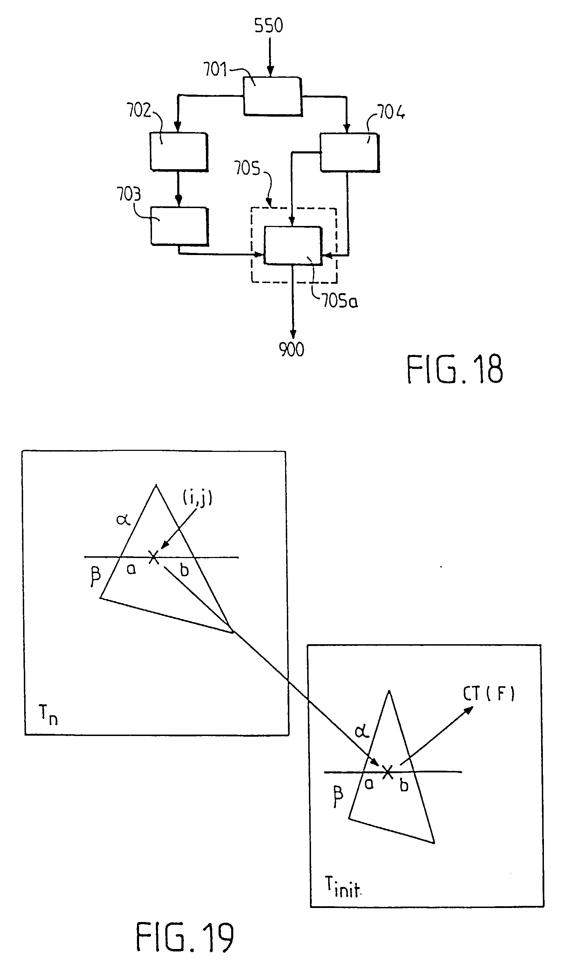

L'étage 700 de décodage des informations de réactualisation, prévu en parallèle sur l'étage 600 et représenté plus en détail sur la figure 18, comprend tout d'abord un circuit 701 de réception des paramètres codés qui indiquent les variations de position du modèle tridimensionnel et les déplacements des différents points de contrôle. Ces paramètres, notés précédemment dθ, dφ, dψ, dTx, dTy pour les variations de position et DEPL(c), DEPL(y) pour les déplacements de points de contrôle, avaient été, on le rappelle, codés par le circuit 431, ici sur 5 bits, et suivant une séquence déterminée permettant de les retrouver au décodage dans le même ordre.

En sortie du circuit 701 est prévu un circuit 702 de calcul des coordonnées d'écran, dans lequel la position courante du modèle tridimensionnel, définie initialement par les paramètres θ, φ, ψ, Tx, Ty, est redéfinie à l'aide des paramètres de variations ci-dessus, θ devenant θ + dθ, φ devenant φ + dφ, etc... Pour calculer les coordonnées d'écran, le modèle tridimensionnel subit, par rapport à la position courante, comme dans le cas du circuit 603, les rotations dθ, dφ, dψ, et les translations dTx, dTy. Le circuit 702 est suivi d'un circuit 703 de calcul d'image de synthèse, opérant comme dans le cas du circuit 606. La luminance $I(SYNTH)_F$ est en effet donnée par la même expression que ci-dessus. Comme la facette F concernée, dans le cas général, n'est pas orientée dans les images ultérieures de la même façon que dans l'image initiale pour laquelle a eu lieu l'apprentissage des coefficients de texture, le nombre (i,j) de pixels de cette facette dans le plan de l'écran n'est, lui non plus, pas le même que pour cette image initiale, et le coefficient CT(F) est interpolé à partir des coefficients de texture transmis (du sous-ensemble de codage au sous-ensemble de décodage) sous la forme d'un tableau conservé en mémoire.

Le procédé utilisé pour cette interpolation est décrit en référence à la figure 19. Sur cette figure, un point (i,j) d'une trame (de rang n par exemple, la trame étant alors notée $T_n$) est repéré dans le plan image par quatre coefficients α, β, a, b. Dans ce repérage par rapport aux arêtes de la facette F concernée, α et β désignent respectivement les longueurs d'arête au-dessus et au-dessous du point d'intersection de la ligne i avec les arêtes correspondantes de la facette (α et β n'ont été représentés, sur la figure 19, que sur une seule arête), et a et b sont les deux longueurs de segment permettant d'assurer le repérage de la position du pixel (i,j) par rapport aux deux arêtes concernées. On recherche alors le point ayant, dans la facette initiale (dans la trame initiale notée $T_{init}$), les mêmes coordonnées relatives, ce point correspondant à un élément dudit tableau de mémorisation des coefficients de texture. La valeur interpolée correspondant à ce point est alors choisie comme coefficient de texture.

En sortie du circuit 701 est également prévu un circuit 704 de détermination des informations relatives aux fenêtres. Ce circuit 704 assure d'une part le calcul des positions et des dimensions des fenêtres associées, dans la zone utile des images, aux zones dites d'intérêt particulier (parce que correspondant à des régions de forte expression faciale), et d'autre part la réception et le décodage des informations relatives à ces fenêtres. Ces positions et dimensions sont calculées à partir des données initiales concernant les points caractéristiques de définition de ces fenêtres dans la partie codage, ainsi qu'à partir des composantes de déplacement DEPL(x), DEPL(y). La réception des valeurs codées correspondant au contenu de ces fenêtres est terminée lorsqu'arrive un signal "fin de fenêtre". Le décodage proprement dit dépend bien sûr du type de codage choisi dans le sous-ensemble de codage, ce sera par exemple un décodage de type MPEG ou H261.

En sortie des circuits 703 et 704 est enfin prévu, dans l'étage 700, un dispositif 705 d'adaptation des fenêtres aux images de synthèse. Ce dispositif 705, qui est, dans ce mode de réalisation de la figure 18, proposé sous la forme d'un circuit unique 705a, permet en quelque sorte le recollage de la ou des fenêtres sur l'image de synthèse. L'image de synthèse définitive est donc soit I(SYNTH)(i,j) pour tout point (i,j) n'appartenant pas à une fenêtre, soit I(FEN/CORR) (i,j) pour tout point (i,j) situé à l'intérieur d'une fenêtre. L'image de synthèse définitive ainsi disponible est reçue et affichée par l'étage d'affichage vidéo 900.

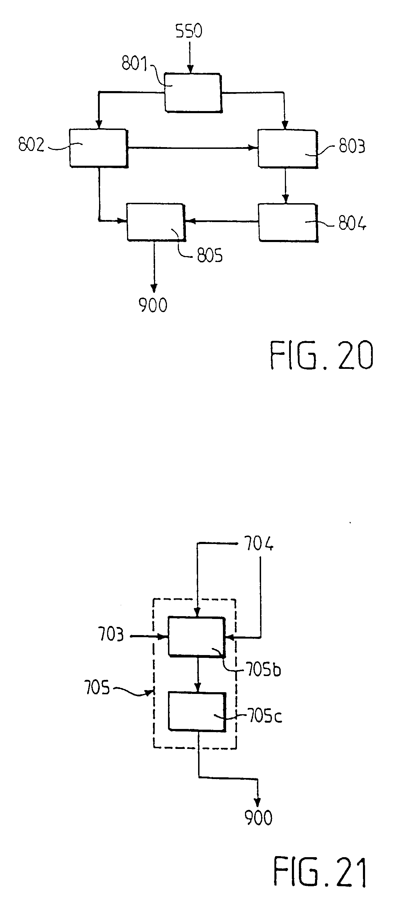

Lorsque le sous-ensemble de codage décrit plus haut comprend un dispositif de correction de calibration destiné à mettre en oeuvre une opération de rafraîchissement, l'étage 800 de décodage des informations de rafraîchissement, dont les connexions d'entrée et de sortie sont représentées en trait interrompu sur la figure 15, est effectivement prévu, et la figure 20 en montre un exemple de réalisation. Il faut noter que cette opération de décodage des informations de rafraîchissement exécutée par l'étage 800 est assez semblable à l'opération de décodage des informations de calibration initiale. En outre, la réception des informations codées de rafraîchissement peut, comme dans le cas du rafraîchissement au codage, durer plusieurs cycles d'image.

L'étage 800, prévu en sortie du circuit 550 (commutateur de mode de fonctionnement), comprend tout d'abord un circuit 801 de réception d'un code "nouvelle image" et des mots de code correspondant aux paramètres tridimensionnels, c'est-à-dire aux paramètres $d\theta$, $d\varphi$, $d\psi$, dTx, dTy de variation de position et aux composantes de déplacement DEPL(x), DEPL(y) exprimant les déplacements des points caractéristiques des fenêtres de codage. Comme le circuit 601, ce circuit 801 devient transparent lorsqu'il a reçu et traité lesdits mots de code, et laisse donc passer les informations codées correspondant aux fenêtres.

Le circuit 801 est suivi d'un circuit 802 de calcul des coordonnées d'écran et des coordonnées de la ou des fenêtres de rafraîchissement (ici, deux fenêtres correspondant respectivement à la zone AR et à la zone JO). Les coordonnées d'écran sont calculées comme précédemment dans le cas du circuit 603 (application des rotations éventuelles puis translation et homothétie). Le circuit 802 assure également le prélèvement et la mémorisation des informations correspondant à la position de l'image au moment du rafraîchissement (c'est-à-dire, plus précisément, au début et à la fin de la séquence de rafraîchissement), informations qui sont nécessaires pour le calcul de l'image de synthèse. Le circuit 802 assure enfin le calcul des coordonnées des fenêtres de rafraîchissement, selon la méthode déjà décrite à propos de la figure 9 et de la détermination des coordonnées des trois fenêtres correspondant aux zones d'intérêt particulier.

Le circuit 801 est également suivi, en parallèle du circuit 802, d'un circuit 803 de décodage des informations de rafraîchissement. Ce circuit 803 reçoit du circuit 801 les mots de code pour la ou les fenêtres (ici, deux) de rafraîchissement, lesdits mots de code dépendant bien entendu du procédé de codage adopté initialement (par exemple un codage suivant une norme de type JPEG), et reçoit également du circuit 802 les coordonnées des fenêtres, puis assure le décodage lui-même, selon la même norme. On obtient ainsi l'image des fenêtres de rafraîchissement. Le circuit 803 est suivi d'un circuit 804 de calcul des coefficients de texture identique au circuit 605. Pour ce calcul, qui a été décrit précédemment et ne le sera donc pas ici à nouveau, on utilise les coordonnées et l'orientation du modèle tridimensionnel qui correspondent à l'image transmise (c'est-à-dire à la première image du cycle de rafraîchissement).

Enfin, un circuit 805 de calcul d'image de synthèse, opérant de façon similaire aux circuits 606 et 703, est prévu en sortie des circuits 802 et 804. L'étage 900 d'affichage vidéo reçoit alors les sorties respectives des circuits 606 et 805 de calcul d'image de synthèse et du circuit 705 d'adaptation des fenêtres aux images de synthèse. Cet étage 900 est de type classique et n'est pas décrit ici.

Bien entendu, la présente invention n'est pas limitée aux exemples de réalisation ci-dessus décrits et représentés, à partir desquels des variantes peuvent être proposées sans pour cela sortir du cadre de l'invention.

En particulier, on a vu que, pour éviter un décalage de luminance entre l'image de synthèse et l'image dans les fenêtres, le dispositif de codage 400 du sous-ensemble de codage comprend un circuit 433 spécialement affecté à la correction de ce décalage. Cette correction pourrait n'être effectuée qu'ultérieurement, dans le sous-ensemble de décodage. Dans ce dernier cas, le circuit 433 et les connexions qui lui correspondent sont alors supprimés dans le sous-ensemble de codage, et un dispositif 705 différent de celui qui est représenté sur la figure 18 est prévu dans le sous-ensemble de décodage.

Ce dispositif modifié d'adaptation des fenêtres aux images de synthèse, représenté sur la figure 21, n'est plus réalisé comme précédemment sous la forme d'un circuit unique, mais comprend maintenant, en série, un circuit 705b de correction de décalage de luminance, recevant les sorties des circuits 703 et 704, et un circuit 705c d'adaptation des fenêtres aux images de synthèse, recevant la sortie du circuit 705b et dont le signal de sortie est, comme dans le cas du circuit 705a similaire de la figure 18, envoyé vers l'étage d'affichage 900. Le signal de sortie du circuit 704 de détermination des informations relatives aux fenêtres est maintenant le signal transmis et décodé qui correspond au signal I(SOURCE)$_{i,j}$, et non plus à I(FEN/CORR)(i,j) comme dans le cas de la figure 18 où le circuit 704 reçoit comme informations des signaux qui ont, au codage, avant transmission et/ou stockage, subi la correction de luminance apportée par le circuit 433. Lorsque cette correction n'est effectuée qu'au décodage, le circuit de codage 432 code des valeurs de luminance non corrigées, et non pas les valeurs corrigées par ce circuit 433.

Comme précédemment pour le circuit 433, le circuit 705b détermine d'abord la zone efficace inscrite dans chaque fenêtre et qui contient réellement l'image de synthèse (la figure 9 avait montré, pour la fenêtre correspondant à la bouche, l'intérêt de cette détermination, à savoir éviter de prendre en compte une zone n'appartenant pas au visage). Le circuit 705b calcule ensuite, dans une petite zone telle que les petits carrés représentés sur les figures 11 à 13, le décalage moyen de luminance entre l'image source dans la fenêtre considérée et l'image de synthèse. Le circuit 705b permet enfin d'obtenir, après une correction en tous points identique à celle qui a été décrite pour le circuit 433 dans trois variantes de réalisation distinctes (ces trois variantes sont applicables ici à nouveau), la luminance corrigée dans ladite fenêtre considérée. C'est maintenant cette valeur corrigée qui est fournie au circuit 705c réalisant, comme dans le cas du circuit unique 705a du mode de réalisation de la figure 18, le recollage de la ou des fenêtres sur l'image de synthèse.

## Revendications

1. Sous-ensemble de codage d'images disponibles sous la forme de signaux numériques correspondant aux informations de luminosité ou de couleur des points d'image ou pixels, lesdites images comprenant au moins un motif mobile sur un fond fixe ou quasi-fixe et étant destinées à une transmission à très bas débit et/ou à un stockage avec un taux élevé de compression de données, ledit sous-ensemble comprenant, en vue de la restitution ultérieure d'images de synthèse, d'une part des moyens de construction (200,300) d'un modèle de base à facettes représentatif d'une zone dite utile des images d'origine et d'autre part des moyens de codage (400) des données à transmettre et/ou stocker,

   (A) lesdits moyens de construction (200,300) d'un modèle de base comprenant des moyens de calibration initiale (200), dans une période déterminée, de ce modèle dans ladite zone utile des images, avec adaptation dudit modèle à des points de référence caractéristiques obtenus dans cette zone utile, et des moyens de réactualisation (300) des informations essentielles représentatives dudit modèle calibré, comprenant eux-mêmes un circuit de détermination du mouvement (301) des points caractéristiques extraits de ladite zone utile et un circuit de sélection (302) d'au moins une zone d'intérêt particulier à l'intérieur de ladite zone utile et de détermination de son mouvement ;
   caractérisé en ce que
   (B) lesdits moyens de codage (400) comprennent eux-mêmes en parallèle:

   (1) un circuit de codage spécifique (420) des signaux de sortie desdits moyens de calibration initiale ;
   (2) un circuit de codage spécifique (431) des signaux de sortie dudit circuit de détermination de mouvement ;
   (3) un circuit de codage spécifique (432) des signaux de sortie dudit circuit de sélection de zone d'intérêt ;
   (4) un circuit de correction préalable (433), dans une zone de transition longeant la frontière de ladite ou desdites zones d'intérêt, des décalages de luminance observés de part et d'autre de ladite frontière.

2. Sous-ensemble de codage selon la revendication 1, caractérisé en ce que, dans lesdits moyens de construction (200,300) d'un modèle de base, les moyens de calibration initiale (200) comprennent un circuit d'extraction (201) desdits points caractéristiques de ladite zone utile, et en ce que les moyens d'adaptation comprennent un circuit d'alignement (202) sur les images originales et de mise à l'échelle et un circuit d'ajustement (203) de régions plus expressives.

3. Sous-ensemble de codage selon l'une des revendications 1 et 2, caractérisé en ce que chaque zone de transition pour la correction du décalage de luminance est un ruban d'une largeur de quelques pixels et dont les bords sont sensiblement parallèles à ladite frontière.

4. Sous-ensemble de codage selon l'une des revendications 1 à 3, caractérisé en ce qu'il comprend également un dispositif de correction de calibration (500), comprenant lui-même des moyens de détection (510) d'écart de luminance, ou de chrominance respectivement, entre lesdites images de synthèse et les images originales correspondantes, des moyens de rafraîchissement local (520) de données selon les résultats de ladite détection, et des moyens de codage (530) des informations complémentaires ou nouvelles obtenues à la suite dudit rafraîchissement, lesdites informations codées complémentaires ou nouvelles étant transmises et/ou codées de façon prioritaire par rapport aux données codées à transmettre et/ou stocker.

5. Sous-ensemble selon la revendication 4, caractérisé en ce que lesdits moyens de détection comprennent un circuit de calcul de l'erreur moyenne entre une image de synthèse et l'image originale correspondante.

6. Sous-ensemble selon la revendication 4, caractérisé en ce que lesdits moyens de détection comprennent un circuit de détection angulaire de l'orientation dudit modèle initialement calibré.

7. Sous-ensemble selon la revendication 4, caractérisé en ce que, des grandeurs dites coefficients de texture étant attachées à chaque facette du modèle de base, lesdits moyens de détection comprennent un circuit de calcul du rapport, pour une facette donnée, ou pour plusieurs ou la totalité des facettes d'une zone donnée, entre le nombre de coefficients de texture déterminés par interpolation des valeurs initiales de ces coefficients de texture pour la ou les facettes considérées et le nombre de ces coefficients de texture initiaux pour la ou les mêmes facettes.

8. Sous-ensemble de décodage de signaux représentatifs d'une séquence d'images et ayant préalablement subi, en vue de leur transmission dans un canal à très bas débit et/ou de leur stockage avec un taux de compression de données élevé, un codage réalisé à l'aide d'une part de moyens de construction d'un modèle de base à facettes représentatif de la zone utile desdites images, par calibration initiale du modèle dans cette zone utile puis réactualisation des informations représentatives du modèle ainsi calibré par un suivi des déplacements d'une ou de fenêtres initialement définies en des zones caractéristiques, d'intérêt particulier, de ladite zone utile des images, et d'autre part de moyens de codage spécifique des informations essentielles résultant desdites calibration initiale et réactualisation, ledit sous-ensemble de décodage étant caractérisé en ce qu'il comprend :

(1) un circuit de détection (550) de la présence du mode de fonctionnement en calibration initiale ou au contraire en réactualisation ;
(2) en sortie de celui-ci et en parallèle l'un sur l'autre :

(a) un étage de décodage (600) des informations de calibration initiale ;
(b) un étage de décodage (700) des informations de réactualisation ;

(3) un étage d'affichage vidéo (900), prévu pour recevoir les sorties en parallèle desdits étages de décodage.

9. Sous-ensemble de décodage selon la revendication 8, caractérisé en ce que :

(A) ledit étage de décodage (600) des informations de calibration initiale comprend :

(a) une première voie comprenant elle-même, en série, un circuit de mémorisation (601) de paramètres initiaux, pour la mise à l'échelle du modèle de base, un circuit de calcul et de mémorisation (602) d'informations d'adaptation dudit modèle à partir des variations des coordonnées des noeuds des facettes de ce modèle, et un circuit de calcul (603) des coordonnées initiales correspondant à l'orientation de l'image initiale transmise ;
(b) en parallèle sur ladite première voie, une deuxième voie comprenant elle-même, en série, un circuit de réception (604) et de décodage de la ou des fenêtres initiales de la séquence d'images, un circuit de calcul (605) de coefficients de texture attachés respectivement aux facettes du modèle, et un circuit de calcul (606) d'image de synthèse, ce dernier étant prévu pour recevoir également le signal de sortie dudit circuit de calcul de coordonnées initiales et pour fournir son signal de sortie audit étage d'affichage vidéo ;

(B) ledit étage de décodage (700) des informations de réactualisation comprend :

(a) un circuit de réception (701) des paramètres codés indiquant les déplacements des points caractéristiques du modèle ;
(b) en sortie de celui-ci et en parallèle l'une sur l'autre, une première branche comprenant elle-même en série un circuit de calcul (702) des coordonnées d'écran, pour la définition de la position courante du

**EP 0 566 185 B1**

modèle à l'aide desdits paramètres codés, et un circuit de calcul (703) d'image de synthèse, et une deuxième branche comprenant elle-même un circuit de détermination (704) d'informations relatives aux fenêtres associées à des zones d'intérêt particulier des images, pour le calcul des positions et dimensions de ces fenêtres ainsi que la réception et le décodage des informations codées relatives à ces fenêtres, et, en sortie de ces deux branches, un dispositif d'adaptation (705) des fenêtres aux images de synthèse.

10. Sous-ensemble de décodage selon la revendication 9, caractérisé en ce que, lorsque les moyens de codage incluent notamment des moyens de correction préalable des décalages de luminance pouvant être observés de part et d'autre des frontières qui, dans ladite zone utile, séparent l'une de l'autre les zones de codage spécifique, ledit dispositif d'adaptation est un circuit unique (705a) de recollage de la ou des fenêtres sur chaque image de synthèse.

11. Sous-ensemble de décodage selon la revendication 9, caractérisé en ce que ledit dispositif d'adaptation comprend, en série, un circuit de correction (705b) de décalage de luminance, recevant les sorties desdits circuits de calcul d'image de synthèse et de détermination d'informations relatives aux fenêtres, et un circuit d'adaptation (705c) des fenêtres aux images de synthèse.

12. Sous-ensemble de décodage selon l'une des revendications 10 et 11, caractérisé en ce que ledit circuit de détection (550) de mode de fonctionnement comprend aussi une détection de la présence d'un mode de rafraîchissement des informations de calibration et en ce que le sous-ensemble de décodage comprend, en sortie dudit circuit de détection et en parallèle sur les étages de décodage d'informations de calibration (600) et de réactualisation (700), un étage de décodage (800) des informations de rafraîchissement dont la sortie est également reçue par ledit étage d'affichage vidéo (900), cet étage de décodage comprenant lui-même :

(a) un circuit de réception (801) des paramètres codés indiquant les déplacements des points caractéristiques du modèle ;
(b) en sortie de celui-ci et en parallèle l'une sur l'autre, une première branche, comprenant elle-même un circuit de calcul (802) des coordonnées d'écran et des coordonnées de la ou des fenêtres résultant du rafraîchissement, et une deuxième branche, comprenant elle-même en série un circuit de décodage (803) des informations de rafraîchissement, recevant également lesdites coordonnées de la ou des fenêtres résultant du rafraîchissement, et un circuit de calcul (804) des coefficients de texture attachés aux facettes du modèle concernées par ledit rafraîchissement, et, en sortie de ces deux branches, un circuit de calcul (805) d'image de synthèse.

**Patentansprüche**

1. Unter-Ensemble zur Kodierung von Bildern, die in der Form von digitalen Signalen zur Verfügung stehen und den Helligkeits- oder Farbinformationen der Bildpunkte oder Pixel entsprechen, die besagten Bilder enthalten mindestens ein bewegliches Muster auf einem festen oder quasi festen Hintergrund und sind für eine Übertragung sehr niederer Rate und/oder die Speicherung mit einem sehr hohen Datenkompressionsniveau bestimmt, das besagte Unter-Ensemble enthält zur späteren Rückgewinnung der Synthesebilder einerseits Mittel für den Aufbau (200, 300) eines Basismodells mit Facetten, die einen sogenannten Nutzbereich der Originalbilder darstellen, und andererseits Mittel zur Kodierung (400) der zu übertragenden und/oder speichernden Daten,

(A) während die besagten Mittel für den Bau (200, 300) eines Basismodells Mittel für die anfängliche Kalibrierung (200) über einen bestimmten Zeitraum dieses Modells in dem besagten Bildnutzbereich enthalten, mit Anpassung des besagten Modells an charakteristische, in diesem Referenzbereich erhaltene Referenzpunkte, und Mittel zur Neuaktualisierung (300) der wichtigsten, das besagte kalibrierte Modell darstellenden Informationen, die wiederum eine Schaltung zur Bestimmung der Bewegung (301) der charakteristischen, aus dem besagten Nutzbereich entnommenen Punkten und eine Schaltung zur Auswahl (302) mindestens eines bestimmten Bereichs im Innern des besagten Nutzbereichs und zur Bestimmung seiner Bewegung beinhalten; mit dem Merkmal:
(B) daß die besagten Mittel zur Kodierung (400) ihrerseits parallel zueinander enthalten:

(1) eine Schaltung zur spezifischen Kodierung (420) der Ausgangssignale der besagten anfänglichen Kalibriermittel;
(2) eine Schaltung zur spezifischen Kodierung (431) der Ausgangssignale der besagten Bewegungsbestimmungsschaltung;

(3) eine Schaltung zur spezifischen Kodierung (432) der Ausgangssignale der besagten Interessenbereichsauswahlschaltung;

(4) eine vorhergehende Korrekturschaltung (433) in einem Übergangsbereich entlang der Grenze des oder der besagten Interessenbereichs oder -bereiche der auf der einen wie der anderen Seite der besagten Grenze beobachteten Leuchtdichtenverlagerungen.

2. Unter-Ensemble zur Kodierung gemäß Anspruch 1, dadurch charakterisiert, daß in den besagten Mitteln für den Bau (200, 300) eines Basismodells Mittel für die anfängliche Kalibrierung (200) einer Schaltung für die Entnahme (201) der besagten charakteristischen Punkte des besagten Nutzbereichs enthalten sind, und daß die Anpassungsmittel eine Schaltung für die Ausrichtung (202) an den Originalbildern und die Anpassung des Maßstabs und eine Schaltung für die Angleichung (203) der ausdrucksvollsten Bereiche enthalten.

3. Unter-Ensemble zur Kodierung laut einem der Ansprüche 1 und 2, mit dem Merkmal, daß jeder Übergangsbereich für die Korrektur der Übergangsleuchtdichte ein Streifen einer Breite einiger Pixel ist, dessen Ränder grundlegend zu der besagten Grenze parallel verlaufen.

4. Unter-Ensemble zur Kodierung laut einem der Ansprüche 1 bis 3, mit dem Merkmal, daß es zugleich eine Einrichtung für die Korrektur der Kalibrierung (500) enthält, das wiederum die Mittel für die Erkennung (510) von Leuchtdichten- bzw. Chrominanzabweichungen zwischen den besagten Synthesebildern und den entsprechenden Originalbildern, Mittel für die lokale (520) Auffrischung der Daten gemäß den Ergebnissen der besagten Erkennung und Mittel für die Kodierung (530) der zusätzlich oder neu erhaltenen Informationen infolge der besagten Auffrischung enthält, wobei die besagten zusätzlich oder neu kodierten Informationen im Verhältnis zu den anderen zu übertragenden und/oder zu speichernden Informationen vorrangig übertragen und/oder gespeichert werden.

5. Unter-Ensemble laut Anspruch 4, mit dem Merkmal, daß die besagten Erkennungsmittel eine Schaltung zur Berechnung des mittleren Fehlers zwischen einem Synthesebild und dem entsprechenden Originalbild enthlaten.

6. Unter-Ensemble laut Anspruch 4, mit dem Merkmal, daß die besagten Erkennungsmittel eine Schaltung für die Erkennung des Orientierungswinkels des besagten anfänglich kalibrierten Modells enthalten.

7. Unter-Ensemble laut Anspruch 4, mit dem Merkmal, daß jeder Facette des Basismodells Größen sogenannter Strukturkoeffizienten angehängt sind, und die besagten Erkennungsmittel eine Schaltung zur Berechnung des Verhältnisses einer bestimmten Facette oder mehrerer oder aller Facetten eines gegebenen Bereichs zwischen der Anzahl Strukturkoeffizienten, bestimmt durch Interpolation der anfänglichen Werte dieser Strukturkoeffizienten für die betrachtete Facette oder betrachteten Facetten, und der Anzahl dieser anfänglichen Strukturkoeffizienten für dieselbe Facette oder dieselben Facetten beinhalten.

8. Unter-Ensemble zur Dekodierung der eine Bildsequenz darstellenden Signale, die zuvor für ihre Übertragung über einen Kanal sehr niederer Rate und/oder ihre Speicherung mit einem sehr hohen Datenkompressionsniveau einer Kodierung unterworfen wurden, unter Zuhilfenahme einerseits von Mitteln für den Aufbau eines Basismodells mit Facetten, die den Nutzbereich der besagten Bilder darstellen, durch anfängliche Kalibrierung eines Modells in diesem Bereich und darauffolgende Neuaktualisierung der das so kalibrierte Modell darstellenden Informationen durch die Verfolgung der Verdrängungen eines oder von anfänglich definierten Fenstern in charakteristischen Bereichen besonderen Interesses des besagten Bildnutzbereichs, und andererseits von spezifischen Mitteln zur Kodierung der wesentlichen Informationen, die sich aus der besagten anfänglichen Kalibrierung und Neuaktualisierung ergeben, mit dem Merkmal, daß das besagte Unter-Ensemble folgendes beinhaltet:

(1) eine Schaltung für die Erkennung (550) des vorhandenen Funktionsmodus bei der anfänglichen Kalibrierung oder dagegen bei der Neuaktualisierung;

(2) an dessen Ausgang und parallel zueinander:

(a) eine Stufe zur Dekodierung (600) der anfänglichen Kalibrierinformationen;

(b) eine Stufe zur Dekodierung (700) der Neuaktualisierungsinformationen;

(3) eine Stufe für die Videoanzeige (900), vorgesehen für den Empfang der zu den besagten Dekodierstufen parallelen Ausgänge.

9. Unter-Ensemble zur Dekodierung laut Anspruch 8, mit dem Merkmal, daß:

(A) die besagte Stufe zur Dekodierung (600) der anfänglichen Kalibrierungsinformationen enthält:

(a) einen ersten Weg, der wiederum in Serie eine Schaltung für die Speicherung (601) der anfänglichen Parameter für die Angleichung des Maßstabs des Basismodells, eine Schaltung für die Berechnung und die Speicherung (602) der Angleichungsinformationen des besagten Modells, ausgehend von den Koordinaten der Facettenknoten dieses Modells, und eine Schaltung zur Berechnung (603) der anfänglichen Koordinaten enthält, die der Orientierung des anfänglich übertragenen Bilds entsprechen;

(b) einen parallel zum ersten Weg verlaufenden zweiten Weg, der wiederum in Serie eine Empfangs- (604) und Dekodierschaltung des oder der anfänglichen Fenster der Bildsequenz, eine Schaltung zur Berechnung (605) der mit den jeweiligen Facetten des Modells verbundenen Strukturkoeffizienten und eine Schaltung zur Berechnung der Bildsynthese (606) enthält, wobei diese letztere zugleich für den Empfang des Ausgangssignals der besagten Schaltung zur Berechnung der Anfangskoordinaten und die Übertragung seines Ausgangssignals an die besagte Videoanzeigestufe vorgesehen ist;

(B) die besagte Stufe zur Dekodierung (700) der Neuanktualisierungsinformationen enthält:

(a) eine Schaltung für den Empfang (701) der kodierten Parameter zur Anzeige der Versetzungen der charakteristischen Punkte des Modells;

(b) an deren Ausgang und parallel zueinander einen ersten Zweig, der wiederum in Serie eine Schaltung für die Berechnung (702) der Bildschirmkoordinaten für die Definition der aktuellen Position des Modells unter Zuhilfenahme der besagten kodierten Parameter und eine Schaltung zur Berechnung (703) des Synthesebilds und einen zweiten Zweig enthält, der wiederum eine Schaltung zur Bestimmung (704) der Informationen in bezug auf die mit den Bereichen besonderen Interesses der Bilder verbundenen Fenster für die Berechnung der Positionen und Dimensionen dieser Fenster sowie zum Empfang und die Dekodierung der kodierten Informationen in bezug auf diese Fenster und am Ausgang dieser beiden Zweige eine Einrichtung zur Angleichung (705) dieser Fenster an die Synthesebilder enthält.

10. Unter-Ensemble zur Dekodierung laut Anspruch 9, mit dem Merkmal, daß die Mittel zur Kodierung insbesondere Mittel für die vorhergehende Korrektur der Versetzungen der Leuchtdichte enthalten, die auf der einen und der anderen Seite der Grenzen beobachtet werden können, die in dem besagten Nutzbereich die spezifischen Kodierbereiche voneinander trennen, die Angleichungseinrichtung eine einzige (705a) Schaltung für das erneute Einfügen des oder der Fenster in jedes Synthesebild.

11. Unter-Ensemble zur Dekodierung laut Anspruch 9, mit dem Merkmal, daß die Angleichungseinrichtung in Serie eine Schaltung zur Korrektur (705b) der Leuchtdichtenversetzung enthält, die die Ausgänge der besagten Schaltungen zur Synthesebildberechnung und zur Bestimmung der Informationen in bezug auf die Fenster erhält, und eine Schaltung zur Angleichung (705c) der Fenster an die Synthesebilder.

12. Unter-Ensemble zur Dekodierung laut einem der Ansprüche 10 und 11, mit dem Merkmal, daß die besagte Schaltung zur Erkennung (550) des Funktionsmodus auch eine Erkennung des Vorhandenseins eines Modus für die Auffrischung der Kalibrierungsinformationen beinhaltet, und daß das Unter-Ensemble zur Dekodierung am Ausgang der besagten Erkennungsschaltung parallel zu den Stufen zur Dekodierung der Kalibrierungs- (600) und Neuaktualisierungsinformationen (700) eine Stufe zur Dekodierung (800) der Auffrischungsinformationen enthält, deren Ausgang zugleich von der besagten Videoanzeigenstufe (900) empfangen wird, wobei die Dekodierstufe an sich folgendes beinhaltet:

(a) eine Schaltung für den Empfang (801) der kodierten Parameter zur Anzeige der Versetzungen der charakteristischen Punkte des Modells;

(b) an deren Ausgang und parallel zueinander einen ersten Zweig, der wiederum in Serie eine Schaltung für die Berechnung (802) der Bildschirmkoordinaten und der Koordinaten des oder der sich aus der Auffrischung ergebenden Fenster, und einen zweiten Zweig, der wiederum in Serie eine Schaltung zur Dekodierung (803) der Auffrischungsinformationen enthält, die zugleich die besagten Koordinaten des oder der sich aus der Auffrischung ergebenden Fenster erhält, und eine Schaltung zur Berechnung (804) der mit den Facetten des betreffenden Modells durch die besagte Auffrischung verbundenen Strukturkoeffizienten und am Ausgang dieser beiden Zweige eine Schaltung zur Synthesebildberechnung (805).

**Claims**

1. A subassembly for coding images which are available in the form of digital signals corresponding to luminosity or colour information of picture elements or pixels, which images comprise at least a moving pattern against a fixed or quasi-fixed background and are to be transmitted at a very low transmission rate and/or stored at a high data compression rate, while said subassembly comprises, for the purpose of an eventual restoration of synthesized images, on the one hand, means (200, 300) for constructing a base model with facets representing a so-called useful zone of the original images and, on the other hand, means (400) for coding data to be transmitted and/or stored,

    (A) said means (200, 300) for constructing a base model comprising means (200) for initial calibration, in a given period, of this model in said useful zone of the images, with adaptation of said model to characteristic reference points obtained in this useful zone, and means (300) for updating essential information representative of said calibrated model, these means in their turn comprising a circuit (300) for determining the movement of characteristic points taken from said useful zone and a circuit (302) for selecting at least one zone of particular interest inside said useful zone and for determining the movement thereof, characterized in that
    (B) said coding means in their turn comprise, in parallel:

        (1) a circuit (420) specific for coding of output signals of said means for initial calibration;
        (2) a circuit (431) for specific coding of output signals of said circuit for determining movement;
        (3) a circuit (432) for specific coding of output signals of said circuit for selecting the zone of interest;
        (4) a circuit (433) for preliminary correction, in a zone of transition lying alongside the border(s) of said zone(s) of interest, of shifts in luminance observed on either side of said border(s).

2. A coding subassembly as claimed in Claim 1, characterized in that the initial calibration means (200) in said means (200, 300) for constructing a base model comprise a circuit (201) for extracting said characteristic points of said useful zone, and in that the adaptation means comprise a circuit (202) for alignment with the original images and for achieving the correct scale and a circuit (203) for adjusting the most expressive regions.

3. A coding subassembly as claimed in Claim 1 or 2, characterized in that each transition zone for the correction of the luminance shift is a strip having a width of a few pixels whose edges are substantially parallel to said border.

4. A coding subassembly as claimed in any one of Claims 1 to 3, characterized in that it comprises in addition a calibration correction device (500) which comprises in its turn means (501) for detecting luminance or chrominance differences, as applicable, between said synthesized images and the corresponding original images, means (520) for locally refreshing data on the basis of the results of said detection, and coding means (530) for complementary or new information obtained following this refresh operation, said coded complementary or new information being transmitted and/or stored with priority with respect to other coded data to be transmitted and/or stored.

5. A subassembly as claimed in Claim 4, characterized in that said detection means comprise a circuit for calculating the average error between a synthesized image and the corresponding original image

6. A subassembly as claimed in Claim 4, characterized in that said detection means comprise an angle detection circuit for detecting the orientation of said model which was initially calibrated.

7. A subassembly as claimed in Claim 4, characterized in that quantities called texture coefficients are attached to each facet of the base model, and said detection means comprise a circuit for calculating the ratio, for a given facet or for several or all facets of a given zone, between the number of texture coefficients determined through interpolation of the initial values of these texture coefficients for the facet(s) considered and the number of the initial texture coefficients for the same facet(s).

8. A subassembly for decoding signals representing a sequence of images, which signals, for the purpose of their transmission through a channel at a very low transmission rate and/or their storage at a high data compression rate, have been previously subjected to a coding carried out, on the one, hand by means for constructing a base model with facets representing the useful zone of said images through initial calibration of the model in this useful zone followed by updating of the information representative of the model thus calibrated by tracking of the displacement of one or more windows initially defined in characteristic zones of particular interest of said useful zone of the images, and on the other hand by means for specific coding of the essential information resulting from said initial calibration and updating, which decoding subassembly is characterized in that it comprises:

(1) a circuit (350) for detecting which operating mode obtains: initial calibration or, in contrast, updating;
(2) at the output thereof and mutually in parallel:

(a) a decoding stage (600) for the initial calibration information;
(b) a decoding stage (700) for the updating information;

(3) a video display stage (900) provided for receiving the parallel output signals from said decoding stages.

9. A decoding subassembly as claimed in Claim 8, characterized in that

(A) said decoding stage (600) for initial calibration information comprises:

(a) a first path comprising in its turn, in series, a circuit (601) for memorizing initial parameters for giving the base model the correct scale, a circuit (602) for calculating and memorizing adaptation information of said model on the basis of variations in the coordinates of the nodes of the facets of this model, and a circuit (603) for calculating initial coordinates corresponding to the orientation of the initial image transmitted;
(b) in parallel with said first path, a second path comprising in its turn, in series, a circuit (604) for receiving and decoding the initial window(s) of the sequence of images, a circuit (605) for calculating texture coefficients attached to respective facets of the model, and a circuit (606) for calculating the synthesized image, this latter circuit being also arranged for receiving the output signal of said circuit for calculating initial coordinates and for providing its output signal to said video display stage;

(B) said decoding stage (700) for updating information comprises:

(a) a circuit (701) for receiving coded parameters indicating the displacements of the characteristic points of the model;
(b) at the output of the latter circuit and mutually in parallel, a first branch comprising in its turn, in series, a circuit (702) for calculating screen coordinates for defining the current position of the model with the aid of said coded parameters, and a circuit (703) for calculating the synthesized image, and a second branch comprising in its turn a circuit (704) for determining information on the windows associated with zones of particular interest of the images, for calculating positions and dimensions of these windows as well as for receiving and decoding coded information on these windows, and, at the output of these two branches, a device (705) for adapting windows to synthesized images.

10. A decoding subassembly as claimed in Claim 9, characterized in that, when the coding means include in particular means for preliminary correction of the luminance shifts which may be observed on either side of the borders which, in said useful zone, separate the specific coding zones from one another, said adaptation device is a single circuit (705a) for recombining the window(s) with each synthesized image.

11. A decoding subassembly as claimed in Claim 9, characterized in that said adaptation device comprises, in series, a correction circuit (705b) for luminance shifts which receives the output signals from said circuit for calculating the synthesized image and for determining the information on the windows, and a circuit (705c) for adapting the windows to the synthesized images.

12. A decoding subassembly as claimed in Claim 10 or 11, characterized in that said circuit (550) for detecting the operating mode also comprises a detection of the presence of a refresh mode of calibration information and in that this decoding subassembly comprises, at the output of said detection circuit and in parallel with the decoding stages (600 and 700) for calibration and updating information, a decoding stage (800) for refresh information of which the output signal is also received by said video display stage (900), which latter decoding stage in its turn comprises:

(a) a circuit (801) for receiving coded parameters which indicate the displacements of the characteristic points of the model;
(b) at the output of the latter circuit and mutually connected in parallel, a first branch comprising in its turn a circuit (802) for calculating screen coordinates and coordinates of the window(s) resulting from the refresh operation, and a second branch comprising in its turn, in series, a decoding circuit (803) for refresh information which also receives said coordinates of the window(s) resulting from the refresh operation, and a circuit (804) for calculating texture coefficients attached to the facets of the relevant model by said refresh operation and, at the output of these two branches, a circuit (805) for calculating the synthesized image.

FIG. 1

FIG. 2

FIG.3

FIG.4

A

B

FIG. 5

FIG. 6

FIG.7

FIG.8

FIG.9

FIG.10

FIG.11

FIG.12

FIG.13

FIG.14

FIG. 15

FIG. 16

FIG. 17

FIG.18

FIG.19

FIG. 20

FIG. 21